# EUROPEAN PATENT APPLICATION

(11) **EP 4 836 086 A1**
(43) Date of publication of application: **04.11.2026**
(21) Application number: 25797618.3
(22) Date of filing: 27.04.2025
(51) Int. Cl.: H01M 10/613

(54) **BATTERY APPARATUS, REFRIGERANT HEAT EXCHANGE APPARATUS, AND ELECTRICAL APPARATUS**

(30) Priority: 28.04.2024 CN 202420907842 U; 21.02.2025 WO PCT/CN2025/078572
(71) Applicant: Contemporary Amperex Technology Co., Limited, Ningde, Fujian 352100 (CN)
(72) Inventor: GAO, Bang, Ningde, Fujian 352100 (CN); ZHANG, Ruitong, Ningde, Fujian 352100 (CN); HUANG, Xiaoteng, Ningde, Fujian 352100 (CN)
(74) Representative: Straus, Alexander
(86) International application number: PCT/CN2025/091607
(87) International publication number: WO 2025/228312

(57) **Abstract**

The present application belongs to the technical field of battery production, and provides a battery apparatus, a refrigerant heat exchange apparatus, and an electrical apparatus. The battery apparatus comprises a box body assembly, a battery cell assembly, and a refrigerant heat exchange component. The box body assembly is provided with an accommodating cavity. The battery cell assembly is accommodated within the accommodating cavity. The refrigerant heat exchange component comprises an inlet/outlet region, a main flow distribution/collection region, and a heat exchange region each internally provided with refrigerant flow channels. The main flow distribution/collection region is located between the inlet/outlet region and the heat exchange region, and the refrigerant flow channels within the main flow distribution/collection region are in communication with the refrigerant flow channels within the inlet/outlet region and the main flow distribution/collection region. The inlet/outlet region is configured to introduce or discharge a refrigerant into or from the refrigerant flow channels. The projection of the heat exchange region on the refrigerant heat exchange component coincides with the projection of the battery cell assembly on the refrigerant heat exchange component, and the refrigerant flow channels within the heat exchange region are configured to perform heat exchange with the battery cell assembly. The main flow distribution/collection region and the inlet/outlet region are both configured such that the projections thereof on the refrigerant heat exchange component do not coincide with the projection of the battery cell assembly on the refrigerant heat exchange component. The present application aims to improve the temperature equalization capability of a refrigerant heat exchange component.

## Description

The present application claims the priority to the Chinese patent application with the application number 202420907842.4 and the title of "HEAT EXCHANGE APPARATUS, BATTERY, AND ELECTRICAL APPARATUS" filed with the China National Intellectual Property Administration on April 28, 2024, the entire contents of which are incorporated herein by reference; and claims the priority to the international application PCT/CN2025/078572 with the title of "BATTERY APPARATUS, REFRIGERANT HEAT EXCHANGE APPARATUS, AND ELECTRICAL APPARATUS" filed with the China National Intellectual Property Administration on February 21, 2025, the entire contents of which are incorporated herein by reference.

### TECHNICAL FIELD

Battery apparatuses in new energy vehicles will release a large amount of heat during charge-discharge process, so the battery apparatuses are usually equipped with heat exchange components that can perform heat exchange for a battery cell assembly, achieving cooling and temperature reduction of the battery cell assembly through heat exchange.

In related technology, flow channels in heat exchange components are arranged disorderly, functional zones that have heat exchange capability and non-functional zones with lower heat exchange capability are interspersed with each other, this affects the temperature uniformity of the heat exchange components, resulting in uneven temperature distribution of the components, which in turn impacts the balanced heat exchange of battery cells and further affects the performances and service lives of battery apparatuses.

### SUMMARY OF THE INVENTION

An objective of the embodiments of the present application is to provide a battery apparatus, a refrigerant heat exchange apparatus, and an electrical apparatus to solve the technical problem of poor temperature equalization performance of a refrigerant heat exchange component in the battery apparatus.

### Technical solutions

According to the technical solution adopted in the embodiments of the present application,
in a first aspect, the present application provides a battery apparatus, which includes:
a box body assembly having an accommodating cavity;
a battery cell assembly that is accommodated in the accommodating cavity;
a refrigerant heat exchange component including an inlet and outlet zone, a main flow distribution and collection zone, and a heat exchange zone which are all internally provided with refrigerant flow channels, the main flow distribution and collection zone being arranged between the inlet and outlet zone and the heat exchange zone, the refrigerant flow channel in the main flow distribution and collection zone being in communication with the refrigerant flow channels in the inlet and outlet zone and the main flow distribution and collection zone; the inlet and outlet zone is configured to guide refrigerants into or out of the refrigerant flow channels; the projections of the heat exchange zone and the battery cell assembly on the refrigerant heat exchange component are overlapped, the refrigerant flow channel in the heat exchange zone is configured to perform heat exchange with the battery cell assembly; and the main flow distribution and collection zone and the inlet and outlet zone are both configured such that their projections on the refrigerant heat exchange component do not overlap with the projection of the battery cell assembly.

In this embodiment, the heat exchange zone with high heat exchange capability is separated from the main flow distribution and collection zone and the inlet and outlet zone, the refrigerant flow channels in the main flow distribution and collection zone and the inlet and outlet zone cannot enter a zone of the refrigerant flow channel of the heat exchange zone, so that the refrigerant flow channels in the heat exchange zone are more centralized in distribution, arrangement paths of the refrigerant flow channels can be simplified, thereby facilitating uniform temperature distribution on the heat exchange zone; and the heat exchange zone is configured to be opposite to the battery cell assembly and is configured to exchange heat with the battery cell assembly, so that the capability of the refrigerant heat exchange component for balanced heat exchange on the battery cell assembly is favorably improved.

In one embodiment, the heat exchange zone includes a direct flow zone and a reversing zone; the refrigerant flow channel in the direct flow zone is configured to be a plurality of direct flow channel structures arranged at intervals in a second direction, and each direct flow channel structure extends in a first direction; the refrigerant flow channel in the reversing zone is configured to be a bent flow channel structure that is in communication with the direct flow channel structures; the second direction is perpendicular to the first direction; and the battery cell assembly is arranged opposite to the direct flow zone, or, the battery cell assembly is arranged opposite to the direct flow zone and the reversing zone.

In this embodiment, the direct flow channel structures and the bent flow channel structure are arranged, thus the direct flow zone and the reversing zone are formed on the heat exchange zone, the temperature distribution uniformity in the direct flow zone is improved, such that if heat exchange is carried out between the direct flow zone and the battery cell assembly, the balanced heat exchange on the battery cell assembly is better improved.

In one embodiment, the battery cell assembly includes a plurality of battery cell groups arranged in the second direction, and each battery cell group includes a plurality of battery cells stacked in the first direction.

In this embodiment, in the second direction, the battery cell groups can cover more direct flow channel structures, and in the first direction, the battery cell groups can cover longer direct flow channel structures, thus increasing a corresponding area of the battery cell assembly and the direct flow zone, increasing the heat exchange area, and further improving the heat exchange efficiency.

In one embodiment, the direct flow channel structures have a first length in the first direction, the bent flow channel structure has a second length in the first direction, and a ratio of the second length to the first length is less than 0.1.

In this embodiment, the ratio of the first length of the bent flow channel structure to the second length of the direct flow channel structure is less than 0.1, so that the purpose of controlling an extension length of the bent flow channel structure is achieved, the extension length of the direct flow channel structures is increased, the length and area of the direct flow zone are increased, and the heat exchange efficiency is improved.

In one embodiment, the reversing zone is located at an edge of the heat exchange zone, and/or, the reversing zone is located between the direct flow zone and the main flow distribution and collection zone.

In this embodiment, the reversing zone is arranged at the edge of the heat exchange zone or between the direct flow zone and the main flow distribution and collection zone so as to correspond to a battery cell at the edge position, and therefore the balanced heat dissipation effect is improved.

In one embodiment, the reversing zone further includes a secondary flow distribution and collection structure which is connected between part of the bent flow channel structure and part of the direct flow channel structure.

In this embodiment, the secondary flow distribution and collection structure is additionally arranged, which facilitates the flow channels that are configured to perform backflow in the direct flow channel structure to communicate and perform flow collection, thus facilitating guiding and collecting to the refrigerant which flows back.

In one embodiment, the heat exchange zone has a third length in the first direction, the refrigerant heat exchange component has a fourth length in the first direction, and the ratio of the third length to the fourth length is greater than or equal to 0.6 and less than 1.

In this embodiment, the proportion of the heat exchange zone on the refrigerant heat exchange component is controlled to be greater than or equal to 0.6 and less than 1, therefore, the heat exchange zone can have a large proportion in the refrigerant heat exchange component, the battery cell assembly and the refrigerant heat exchange component can have enough contact area for heat exchange, thereby improving the heat exchange efficiency.

In one embodiment, the heat exchange zone is provided with a heat exchange surface opposite to the battery cell assembly, and the refrigerant flow channel in the heat exchange zone is configured to be opposite to the heat exchange surface; and the ratio of a projection area of the refrigerant flow channel in the heat exchange zone on the heat exchange surface to the area of the heat exchange surface is greater than or equal to 0.4 and less than or equal to 0.8.

In this embodiment, the projection area ratio of the refrigerant flow channels on the surface of the heat exchange zone is reasonably controlled to ensure an enough heat exchange area between the refrigerant and the battery cell, thereby reducing the risk that the refrigerant flow channels are distributed densely or sparsely, improving the heat exchange effect, as well as facilitating the design and the manufacturing of the refrigerant flow channel.

In one embodiment, a spacing distance between two adjacent direct flow channel structures is 5-15 mm in the second direction.

In this embodiment, the spacing distance of 5-15 mm allows a space for the refrigerant to flow between the direct flow channel structures and also enables effective heat exchange of the adjacent direct flow channel structures to the battery cell assembly, thus reducing the risk of insufficient heat exchange caused by too large spacing or excessive flow resistance caused by too small spacing.

In one embodiment, a width of the refrigerant flow channel is 6-15 mm.

In this embodiment, due to the flow channel width of 6-15 mm, the flow velocity, flow rate, flow resistance, and the pressure drop of the refrigerant, the flowing state of the refrigerant in the refrigerant flow channel is good, which is beneficial for improving heat exchange efficiency, while not increasing costs or affecting thermal management performance due to the refrigerant flow channel being too wide or too narrow.

In one embodiment, a plurality of cavities are also formed in the refrigerant heat exchange component, and each cavity is not in communication with the refrigerant flow channel.

In this embodiment, the plurality of cavities have the functions of flow guiding and exhausting during a welding process, thus improving the welding quality and welding sealing performance, as well as improving the overall structural strength of the refrigerant heat exchange component.

In one embodiment, the refrigerant heat exchange component is further provided with a plurality of mounting holes, and the mounting holes are distributed in the heat exchange zone and avoid the refrigerant flow channels.

In the embodiment, the mounting holes are formed so that the refrigerant heat exchange component can be fixedly connected to other components by locking members such as bolts, thereby facilitating connection between the refrigerant heat exchange component and other components.

In one embodiment, the inlet and outlet zone, the main flow distribution and collection zone, and the heat exchange zone are sequentially arranged in the first direction; the refrigerant flow channel in the inlet and outlet zone includes a first-flow-direction flow channel and a second-flow-direction flow channel, and the refrigerant in the first-flow-direction flow channel has a flowing direction opposite to that of the refrigerant in the second-flow-direction flow channel; the refrigerant flow channel in the main flow distribution and collection zone includes a first flow channel and a second flow channel, and the refrigerant flow channel in the heat exchange zone includes an upstream flow channel and a downstream flow channel which are in communication with each other; and the first-flow-direction flow channel, the first flow channel, and the upstream flow channel are sequentially arranged in a communicating mode, and the second-flow-direction flow channel, the second flow channel, and the downstream flow channel are sequentially arranged in a communicating mode.

In this embodiment, the inlet and outlet zone, the main flow distribution and collection zone, and the heat exchange zone are arranged more regularly, the battery cell assembly and the heat exchange zone are oppositely arranged, and therefore targeted centralized heat exchange can be achieved, and the heat exchange balance can be improved.

In one embodiment, the refrigerant flow channel in the heat exchange zone includes a plurality of heat exchange flow sub-channels arranged in parallel, and each heat exchange flow sub-channel includes the upstream flow channel and the downstream flow channel; the upstream flow channels in part of the heat exchange flow sub-channels are adjacent to and in heat conduction fit with the downstream flow channels in the adjacent heat exchange flow sub-channels; and the downstream flow channels in part of the heat exchange flow sub-channels are adjacent to and in heat conduction fit with the upstream flow channels in the adjacent heat exchange flow sub-channels.

In this embodiment, the upstream flow channels and the downstream flow channels in the two heat exchange flow sub-channels are adjacently arranged, such that the low temperature of the upstream flow channels can balance the high temperature of the downstream flow channels, the temperature of the zone of the heat exchange surface corresponding to the downstream flow channels decreases, and therefore an overheated zone is not likely to be formed, the area of the overheated zone is relatively reduced, the heat exchange effect on the battery cell assembly can be improved, the uniformity temperature distribution on the heat exchange surface of the refrigerant heat exchange component is improved, thereby improving the heat exchange uniformity of the battery cell assembly.

In one embodiment, the plurality of heat exchange flow sub-channels are sequentially arranged in the second direction, the upstream flow channels and the downstream flow channels in the heat exchange flow sub-channels extend in the first direction, and the second direction is perpendicular to the first direction.

In this embodiment, the upstream flow channels and the downstream flow channels extend in the first direction X and are adjacently arranged, thus increasing the length of the adjacent zone between the upstream flow channels and the downstream flow channels, increasing the adjacent heat exchange area, and improving the heat exchange efficiency.

In one embodiment, at least one first-flow-direction flow channel is arranged, a plurality of second-flow-direction flow channels are arranged, and all the first-flow-direction flow channels are distributed between every two adjacent second-flow-direction flow channels.

In this embodiment, all first-flow-direction flow channels are arranged between two second-flow-direction flow channels in a centralized manner, the centralized and compact flow channel layout facilitates integrated mounting with structural components and other components, and thus the integration level and reliability of the whole system can be improved.

In one embodiment, the flowing direction of the refrigerants in the first-flow-direction flow channels is the entering direction of the refrigerant flowing to the main flow distribution and collection zone.

In this embodiment, the above design is conducive to arranging the refrigerant in the inflow direction in a middle zone the refrigerant heat exchange component, which helps increase the flow speed of the refrigerant during flowing and improve the heat exchange efficiency.

In one embodiment, the box body assembly includes the box body with the opening, and the refrigerant heat exchange component is connected to the box body and covers the opening to form the accommodating cavity; and the refrigerant heat exchange component is arranged opposite to the battery cell assembly.

In this embodiment, the refrigerant heat exchange component can be connected to the box body and can form the bottom plate, so that the refrigerant heat exchange component can support the battery cell assembly while exchanging heat with the battery cell assembly, which is conducive to simplifying the structure of the external box body and reducing the weight of the battery apparatus.

In a second aspect, the present application provides a refrigerant heat exchange apparatus, which includes the refrigerant heat exchange component in any battery apparatus as described above.

In a third aspect, the present application provides an electrical apparatus, which includes any battery apparatus as described above, and the battery apparatus is configured to store or provide electric energy.

The above description is only an overview of the technical solution of the present application, and in order to be able to understand more clearly the technical means of the present application, it can be implemented in accordance with the contents of the description, and in order to make the above and other purposes, characteristics and advantages of the present application more obvious and easy to understand, the specific embodiments of the present application are listed below.

### BRIEF DESCRIPTION OF THE DRAWINGS

In order to more clearly illustrate the technical solution of the embodiments of the present application, the accompanying drawings that need to be used in the embodiments of the present application or existing technologies will be briefly introduced below, and it is obvious that the accompanying drawings described below are only some embodiments of the present application, and for those skilled in the art, other accompanying drawings can also be obtained according to the accompanying drawings without paying creative labor.
FIG. 1 is a structural schematic diagram of a vehicle provided by some embodiments of the present application;
FIG. 2 is an exploded schematic structural diagram 1 of a battery apparatus provided by some embodiments of the present application;
FIG. 3 is an exploded schematic structural diagram of a refrigerant heat exchange component in a battery apparatus provided by some embodiments of the present application;
FIG. 4 is a schematic structural diagram of distribution of refrigerant flow channels inside a refrigerant heat exchange component in a battery apparatus provided by some embodiments of the present application;
FIG. 5 is a schematic structural diagram 1 of distribution of refrigerant flow channels inside a heat exchange zone in a refrigerant heat exchange component provided by some embodiments of the present application;
FIG. 6 is a schematic structural diagram 2 of distribution of refrigerant flow channels inside a heat exchange zone in a refrigerant heat exchange component provided by some embodiments of the present application;
FIG. 7 is a relative position diagram 1 of refrigerant flow channels in a refrigerant heat exchange component and a battery cell assembly in a battery apparatus provided by some embodiments of the present application;
FIG. 8 is a relative position diagram 2 of refrigerant flow channels in a refrigerant heat exchange component and a battery cell assembly in a battery apparatus provided by some embodiments of the present application;
FIG. 9 is a schematic structural diagram of distribution of a heat exchange surface corresponding to a first surface on a refrigerant heat exchange component provided by some embodiments of the present application;
FIG. 10 is a schematic diagram of a distribution area of refrigerant flow channels inside a heat exchange zone in a refrigerant heat exchange component provided by some embodiments of the present application;
FIG. 11 is a schematic structural diagram of distribution of refrigerant flow channels inside a main distribution and collection zone of a refrigerant heat exchange component provided by some embodiments of the present application;
FIG. 12 is a schematic structural diagram 1 of distribution of refrigerant flow channels inside an inlet and outlet zone in a refrigerant heat exchange component provided by some embodiments of the present application;
FIG. 13 is a schematic structural diagram 2 of distribution of refrigerant flow channels inside an inlet and outlet zone in a refrigerant heat exchange component provided by some embodiments of the present application;
FIG. 14 is a schematic structural diagram of distribution of mounting holes in a refrigerant heat exchange component provided by some embodiments of the present application; and
FIG. 15 is a schematic diagram of temperature distribution of refrigerant flow channels inside a refrigerant heat exchange component in a battery apparatus provided by some embodiments of the present application.

### Reference numerals:

1000, vehicle; 1100, battery apparatus; 1110, battery cell assembly; 1111, battery cell group; 1112, battery cell; 1120, box body assembly; 1121, box body; 1122, cover body; 1123, box frame; 1124, accommodating cavity; 1130, refrigerant heat exchange component; 1131, inlet and outlet zone; 11311, first-flow-direction flow channel; 11312, second-flow-direction flow channel; 1132, main flow distribution and collection zone; 11321, first flow channel; 11322, second flow channel; 11323, first flow distribution channel; 11324, second flow distribution channel; 1133, heat exchange zone; 11331, direct flow zone; 11332, reversing zone; 11333, direct flow channel structure; 11334, bent flow channel structure; 11335, secondary flow distribution and collection structure; 11336, heat exchange flow sub-channel; 11337, upstream flow channel; 11338, downstream flow channel; 11339, heat exchange surface; 1134, refrigerant flow channel; 1135, first surface; 1136, first sub-component; 1137, second sub-component; 1138, cavity; 1139, mounting hole; 1140, connector component; 1200, controller; 1300, motor; X, first direction; Y, second direction; L1, first length; L2, second length; L3, third length; L4, fourth length; L5, spacing distance; and L6, width of refrigerant flow channel.

### DETAILED DESCRIPTION

Embodiments in technical solutions of the present application will be described in detail below in conjunction with the accompanying drawings. The following embodiments are only used for more clearly illustrating the technical solution of the present application and are therefore only embodiments and not to limit the scope of protection of the present application.

Unless otherwise defined, all technical and scientific terms used herein have the same meanings as generally understood by those skilled in the art of the present application; the terms used herein are intended only to describe specific embodiments and are not intended to limit the present application; and the terms "including" and "having" and any variations thereof in the description and claims of the present application and in the foregoing description of the accompanying drawings and in the description thereof, and any variations thereof, are intended to cover non-exclusive inclusions.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meaning of the above terms in the present application may be understood on a case-by-case basis.

In recent years, new energy vehicles have seen leapfrog development, and the market share of new energy vehicles is increasing. Rapid and efficient energy replenishment is an urgent issue that the new energy vehicle industry needs to address.

Battery apparatuses in new energy vehicles will release a large amount of heat during charge-discharge process, so the battery apparatuses are usually equipped with refrigerant heat exchange components that can perform heat exchange for a battery cell assembly, achieving cooling and temperature reduction of the battery cell assembly through heat exchange.

Quick charge is a mainstream solution for quickly replenishing energy in new energy vehicles, but it faces many challenges during implementation; battery cells will generate a large amount of heat during quick charge, which can easily cause a rapid rise in temperature inside a battery pack. During quick charge, it is more likely that the heat exchange between refrigerant heat exchange components and the battery cells will be uneven, leading to a rapid temperature rise in some battery cells, resulting in a large accumulation of heat inside the battery pack, thereby affecting the performance and service life of the battery pack, and may even posing significant risks during use; therefore, ensuring balanced heat dissipation, fast heat exchange, and improving the consistency of temperature distribution within the battery pack has become a bottleneck in battery thermal management.

Specifically, battery apparatuses will generate heat during charging and discharging processes, and if the heat cannot be effectively dissipated, it may lead to a degrading in the battery apparatus performance and a shortened service life; high temperature will accelerate chemical reactions inside the battery apparatuses, increase the internal resistance of the battery apparatus, reduce energy density, and in severe cases, may trigger thermal runaway. Therefore, the refrigerant heat exchange components are installed in the battery apparatuses to cool the battery cell assemblies inside.

Regarding the problem of uneven internal temperature distribution and localized high temperatures in the battery apparatuses, research is carried out and the result shows that for the refrigerant heat exchange components using refrigerant heat exchange, there are many refrigerant flow channels inside the refrigerant heat exchange components and can form functional zones and non-functional zones on the refrigerant heat exchange components, respectively, in which, refrigerants in the flow channels distributed within the functional zones have high heat exchange capacity, and the flow channels in the functional zones serve as main heat exchange flow channels; whereas the refrigerants in the flow channels distributed within the non-functional zones have low heat exchange capacity, for example, the flow channels at inlet and outlet positions are non-functional channels, and the flow channels that primarily serve to guide and divide the flow are also the flow channels in the non-functional zones. However, in related technology, the flow channels in the heat exchange components are arranged disorderly, the functional zones that have heat exchange capability and the non-functional zones with lower heat exchange capability are interspersed with each other, this affects the temperature uniformity of the heat exchange components, resulting in uneven temperature distribution of the components, which in turn impacts the balanced heat exchange of battery cells and further affects the performances and service lives of battery apparatuses.

Specifically, in related technologies, for example, the main distribution flow channels which primarily serve to divide the flow are interspersed among the heat exchange flow channels which are mainly configured to perform heat exchange, which inevitably causes the distribution flow channels to occupy a certain amount of space and area within the functional zones corresponding to the heat exchange flow channels, leading to the disruption of these functional zones, namely, the non-functional zones are interspersed within the functional zones of the refrigerant heat exchange components, resulting in a disordered distribution in the functional zones. For the refrigerant heat exchange components, flow paths of the refrigerants in the intersected flow distribution flow channels and heat exchange flow channels is complex, increasing pressure loss and reducing refrigerant flowing efficiency, and moreover, high-temperature and low-temperature zones intersect and are unevenly distributed, causing non-uniform temperature distribution on the refrigerant heat exchange components, which affects the balanced heat exchange to the battery cells, consequently impacting the performance and service life of the battery apparatus.

In view of above, the present application provides a battery apparatus that divides the refrigerant heat exchange component into an inlet and outlet zone, a main flow distribution and collection zone, and a heat exchange zone, and the main flow distribution and collection zone is located between the inlet and outlet zone and the heat exchange zone, thus the heat exchange zone with high heat exchange capability is separated from the main flow distribution and collection zone and the inlet and outlet zone, the refrigerant flow channels in the main flow distribution and collection zone and the inlet and outlet zone cannot enter a zone of the refrigerant flow channel of the heat exchange zone, so that the refrigerant flow channels in the heat exchange zone are more centralized in distribution, arrangement paths of the refrigerant flow channels can be simplified, thereby facilitating uniform temperature distribution on the heat exchange zone; and the heat exchange zone is configured to be opposite to the battery cell assembly and is configured to exchange heat with the battery cell assembly, so that the capability of the refrigerant heat exchange component for balanced heat exchange on the battery cell assembly is favorably improved.

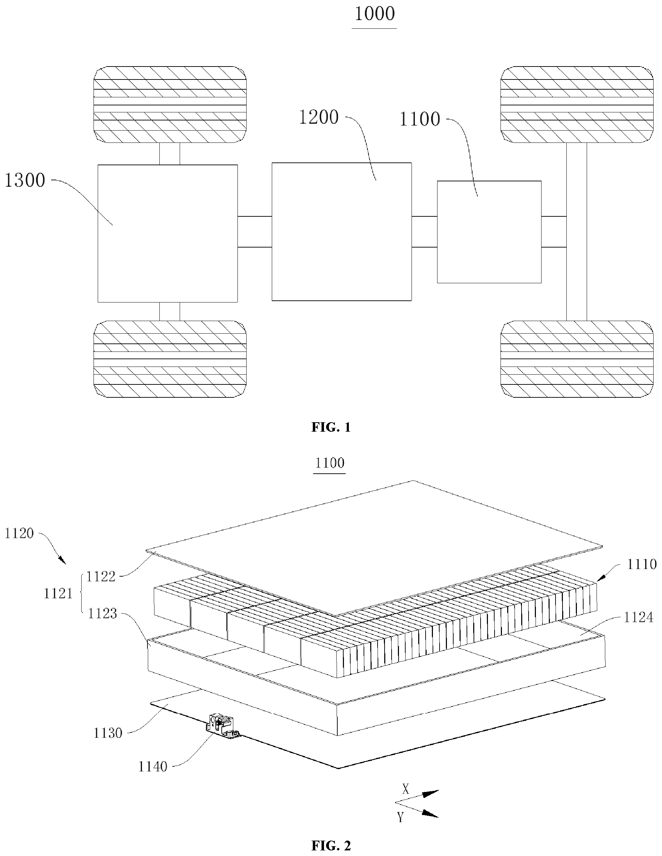

Specifically, as shown in FIG. 2, the embodiment of the present application provides a battery apparatus 1100, which may include one or more battery cell assemblies 1110 for providing voltage and capacity; the battery cell assemblies may include a plurality of battery cells 1112 which are connected in series, parallel, or in series-parallel connection through a busbar component. The battery apparatus 1100 may also be a battery pack, which generally includes a box body assembly 1120 and one or more battery cell assemblies 1110, with the battery cell assemblies 1110 accommodated within the box body assembly 1120.

The battery apparatus 1100 disclosed by the embodiment of the present application can be used in an electrical apparatus that uses the battery apparatus 1100 as a power source and various energy storage apparatuses and energy storage systems that use the battery apparatus 1100 as an energy storage element. The electrical apparatuses may include, but are not limited to, mobile phones, portable devices, laptops, electric toys, power tools, electric vehicles, vehicle, ships, spacecraft, and so on. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

For the convenience of description in the following embodiments, an electrical apparatus being a vehicle 1000 according to an embodiment of the present application is taken as an example for the description.

FIG. 1 is referred, and FIG. 1 is a schematic structural diagram of a vehicle 1000 provided by some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, or the like. A battery apparatus 1100 is arranged in the vehicle 1000. The battery apparatus 1100 may be arranged at the bottom, head, or tail of the vehicle 1000. The battery apparatus 1100 may be configured to supply power to the vehicle 1000. For example, the battery apparatus 1100 may be used as an operating power source of the vehicle 1000. The vehicle 1000 may further include a controller 1200 and a motor 1300. The controller 1200 is configured to control the battery apparatus 1100 to supply power to the motor 1300, for example, for the operating power demand when the vehicle 1000 is starting, navigating, and driving.

In some embodiments of the present application, the battery apparatus 1100 can serve as the operation power source of the vehicle 1000 and can also serve as a driving power source of the vehicle 1000, and replaces or partially replace fuel oil or natural gas to provide driving power for the vehicle 1000.

As shown in FIG. 2, FIG. 2 is an exploded diagram of a battery apparatus 1100 according to some embodiments of the present application. In one embodiment, the battery apparatus 1100 includes a box body assembly 1120 and a battery cell assembly 1110; an accommodating cavity 1124 is formed within the box body assembly 1120, and the battery cell assembly 1110 is placed in the accommodating cavity 1124; the battery cell assembly 1110 is generally formed by arranging a plurality of battery cells 1112, or, the battery cell assembly 1110 can also be a battery module, which is formed by arranging and fixing the plurality of battery cells 1112 into an independent module. The box body assembly 1120 is configured to provide the accommodating cavity 1124 for the battery cell assembly 1110, and the box body assembly 1120 can be of various structures.

The battery cell 1112 refers to the smallest unit that makes up the battery apparatus 1100. Each battery cell 1112 can be a secondary battery cell or a primary battery cell; it can also be a lithium-sulfur battery cell, a sodium-ion battery cell, or a magnesium-ion battery cell, but not limited thereto. The battery cell 1112 can be in a cylinder shape, a flat body shape, a cuboid shape or other shapes.

According to some embodiments of the present application, as shown in FIG. 2 to FIG. 7, the embodiment of the present application provides a battery apparatus 1100, which includes a box body assembly 1120, a battery cell body assembly 1110, and a refrigerant heat exchange component 1130; the box body assembly 1120 is provided with an accommodating cavity 1124, and the battery cell body assembly 1110 is accommodated in the accommodating cavity 1124; the refrigerant heat exchange component 1130 includes an inlet and outlet zone 1131, a main flow distribution and collection zone 1132, and a heat exchange zone 1133 which are all internally provided with refrigerant flow channels, the main flow distribution and collection zone 1132 is located between the inlet and outlet zone 1131 and the heat exchange zone 1133, the refrigerant flow channel 1134 in the main flow distribution and collection zone 1132 is in communication with the refrigerant flow channels 1134 in the inlet and outlet zone 1131 and the main flow distribution and collection zone 1132; the inlet and outlet zone 1131 is configured to guide a refrigerant into or out of the refrigerant flow channels 1134; the projections of the heat exchange zone 1133 and the battery cell assembly 1110 on the refrigerant heat exchange component 1130 are overlapped, the refrigerant flow channel 1134 in the heat exchange zone 1133 is configured to perform heat exchange with the battery cell assembly 1110; and the main flow distribution and collection zone 1132 and the inlet and outlet zone 1131 are both configured such that their projections on the refrigerant heat exchange component 1130 do not overlap with the projection of the battery cell assembly 1110.

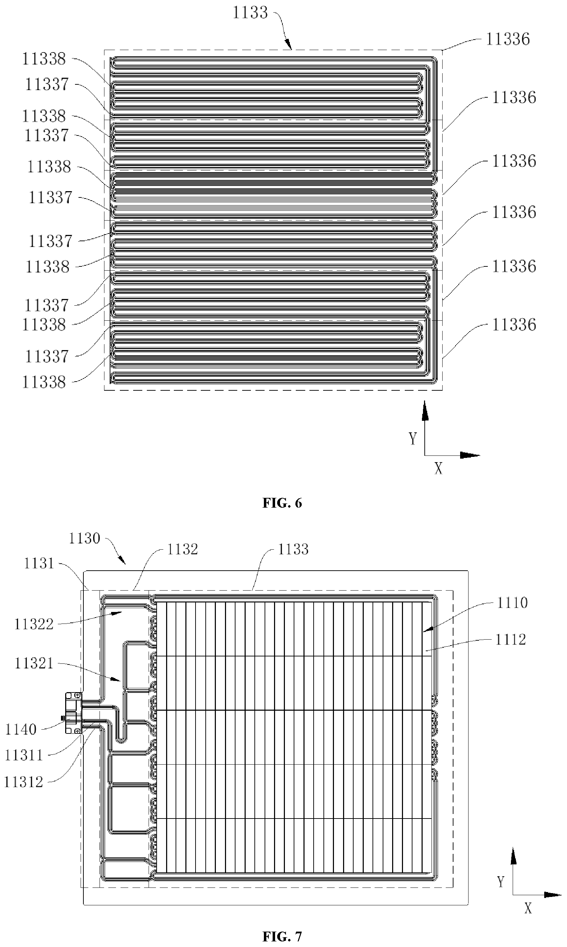

Specifically, as shown in FIG. 2 and FIG. 7, the battery cell assembly 1110 includes one or more battery cells 1112, and the refrigerant heat exchange component 1130 needs to exchange heat with the battery cell assembly 1110, so that it is needed to arrange the refrigerant heat exchange component 1130 close to the battery cell assembly 1110, or, it is needed to arrange the refrigerant heat exchange component 1130 in direct contact with or abutting against the battery cell assembly 1110, thereby improving the heat exchange effect. If the refrigerant heat exchange component 1130 exchanges heat with the battery cell assembly 1110, it needs a large heat exchange zone between the refrigerant heat exchange component 1130 and the battery cells 1112 to improve the heat exchange effect, so that a heat exchange surface 11339 close to or in contact with the surface of the battery cells 1112 is formed on the refrigerant heat exchange component 1130.

A surface of the battery cell 1112 close to or in contact with the heat exchange surface 11339 can be a bottom surface or a side surface of the battery cell 1112; by taking horizontal placement of the battery apparatus 1100 as an example, the lower surface of the battery cell 1112 is the bottom surface, and the surface of the battery cell 1112 in a vertical direction is the side surface, and in the embodiments, the heat exchange surface 11339 of the refrigerant heat exchange component 1130 can be in contact with or close to the bottom surface or the side surface of the battery cell 1112, that is, the refrigerant heat exchange component 1130 can be located at the bottom of the battery cell assembly 1110 or located on the side of the battery cell assembly 1110; and the refrigerant heat exchange component 1130 at the bottom of the battery cell assembly 1110 can also be called a heat exchange bottom plate or a cooling bottom plate.

For ease of explanation, the following embodiments are described using an example in which the battery apparatus 1100 in one embodiment of the present application is placed horizontally, and the refrigerant heat exchange component 1130 is located at the bottom of the battery cell assembly 1110.

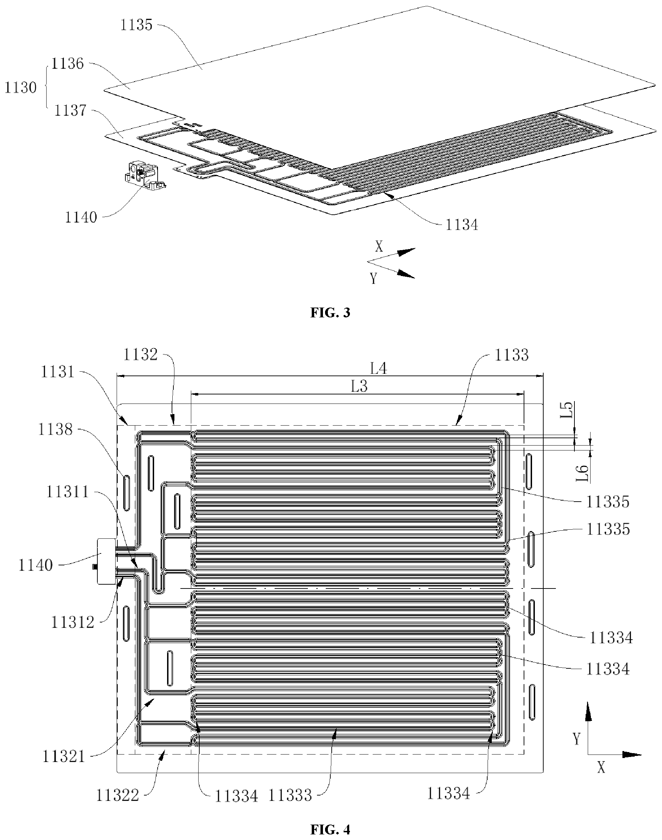

In terms of the refrigerant heat exchange component 1130, as shown in FIG. 4, the refrigerant heat exchange component 1130 can include at least three parts, namely the inlet and outlet zone 1131, the main flow distribution and collection zone 1132, and the heat exchange zone 1133; and the refrigerant flow channels 1134 are distributed in the inlet and outlet zone 1131, the main flow distribution and collection zone 1132, and the heat exchange zone 1133, and the refrigerants flow in the refrigerant flow channels 1134.

The refrigerant flow channel 1134 in the inlet and outlet zone 1131 play roles in flowing in the refrigerants and flowing out the refrigerants; and it is understood that at least two refrigerant flow channels 1134 are arranged in the inlet and outlet zone 1131, one refrigerant flow channel 1134 is used for flowing in the refrigerants and the other refrigerant flow channel 1134 is used for flowing out the refrigerants. The inlet and outlet zone 1131 is configured such that its projection on the refrigerant heat exchange component 1130 is not overlapped with that of the battery cell assembly 1110, wherein it is not understood that the refrigerant flow channels 1134 in the inlet and outlet zone 1131 are arranged to avoid the battery cell assembly 1110 in the direction of the projection, namely the battery cell assembly 1110 is not opposite to the refrigerant flow channels 1134 in the inlet and outlet zone 1131.

The refrigerant flow channel 1134 in the main flow distribution and collection zone 1132 play a role in flow distribution and flow collection, and it is to be understood that the main flow distribution and collection zone 1132 includes a plurality of refrigerant flow channels 1134, and part of the refrigerant flow channels 1134 in the main flow distribution and collection zone 1132 are configured to perform flow distribution, and the part of refrigerant flow channels 1134 for flow distribution can be in communication with the refrigerant flow channels 1134 for refrigerant inflow in the inlet and outlet zone 1131; and the other refrigerant flow channels 1134 in the main flow distribution and collection zone 1132 are configured to perform flow collection, and the refrigerant flow channels 1134 for flow collection can be in communication with the refrigerant flow channels 1134 for refrigerant outflow in the inlet and outlet zone 1131. The main flow distribution and collection zone 1132 is configured such that its projection on the refrigerant heat exchange component 1130 is not overlapped with the projection of the battery cell assembly 1110, in which, the non-overlapping can be understood that the refrigerant flow channels 1134 in the main flow distribution and collection zone 1132 are arranged to avoid the battery cell assembly 1110 in the direction of the projection, that is, the battery cell assembly 1110 is not opposite to the refrigerant flow channels 1134 in the main flow distribution and collection zone 1132.

In terms of the heat exchange zone 1133, the heat exchange zone 1133 is mainly configured to exchange heat with the battery cell assembly 1110, so it is needed to arrange the heat exchange zone 1133 opposite to the battery cell assembly 1110, that is, the projections of the heat exchange zone 1133 and the battery cell assembly 1110 on the refrigerant heat exchange component 1130 needs to be overlapped, and the refrigerant flow channels 1134 in the heat exchange zone 1133 are configured to perform heat exchange with the battery cell assembly 1110.

In terms of the refrigerant flow channel 1134, as shown in FIG. 4, the refrigerant flow channel 1134 can be of a hole structure inside the refrigerant heat exchange component 1130, for example, the refrigerant heat exchange component 1130 is in a plate shape, a through hole structure or a cavity structure with a certain extension length and extension path is formed in the plate of the refrigerant heat exchange component 1130, and the through hole structure or the cavity structure forms the refrigerant flow channel 1134. The refrigerant heat exchange component 1130 can be of an integrated structure, and the refrigerant flow channel 1134 can be prepared in a gas-assisted or water-assisted forming mode; or, the refrigerant heat exchange component 1130 can also be formed in a combined mode, for example, the refrigerant heat exchange component 1130 includes a first sub-component 1136 and a second sub-component 1137, a groove structure with a preset extension length and preset extension shape is formed in the second sub-component 1137, the groove structure can be prepared in a punch molding mode, the first sub-component 1136 and the second sub-component 1137 are fixedly or detachably connected, and a notch of the groove structure is closed to form the through hole structure or the cavity structure, namely the refrigerant flow channel 1134 is formed. The refrigerant flow channels 1134 in the heat exchange zone 1133 are arranged close to the heat exchange surface 11339, and the extension paths of the refrigerant flow channels 1134 can be parallel to the heat exchange surface 11339 so as to improve the heat exchange effect.

For example, the first sub-component 1136 can be an upper plate, the second sub-component 1137 can be a lower plate, and the refrigerant flow channels 1134 are formed on the lower plate in a punch molding mode. The first sub-component 1136 and the second sub-component 1137 can be welded by brazing, and the welded zone can support heat transfer.

Generally, the inlet and outlet zone 1131 and the main flow distribution and collection zone 1132 can be collectively called as the non-functional zones, and the heat exchange zone 1133 can be called as the functional zone. The functional zone is mainly configured to exchange heat with the battery cell assembly 1110, the non-functional zones can be configured to input, output, and distribute the refrigerant, and refrigerant flow channels 1134 are distributed in the functional zone and the non-functional zones.

The inlet and outlet zone 1131, the main flow distribution and collection zone 1132, and the heat exchange zone 1133 have different function characteristics, for example, the refrigerant flow channels 1134 in the inlet and outlet zone 1131 mainly play a role in guiding in and guiding out the refrigerant and are not distributed in a large range, and an extension track of the refrigerant flow channels 1134 in the inlet and outlet zone 1131 is variable, so that the problem of non-uniformity of temperature distribution of the inlet and outlet zone 1131 is caused, making it is not suitable for performing heat exchange on battery cell assembly 1110; therefore, the battery cell assembly 1110 and the inlet and outlet zone 1131 are subjected to avoidance design, such that the projections of the inlet and outlet zone 1131 and the battery cell assembly 1110 on the refrigerant heat exchange component 1130 are not overlapped. For another example, the refrigerant flow channel 1134 in the main flow distribution and collection zone 1132 mainly plays a role in flow distribution and flow collection, the arrangement range of the refrigerant flow channel 1134 is not too large, and the extension track of the refrigerant flow channel 1134 in the main flow distribution and collection zone 1132 is more variable; the problem of non-uniformity of temperature distribution in the heat exchange zone 1133 is more, the battery cell assembly 1110 is not suitable for heat exchange, otherwise, the problem of non-uniformity of heat exchange of the battery cell assembly 1110 is caused, so that the battery cell assembly 1110 and the main flow distribution and collection zone 1132 are subjected to avoidance design, and the projections of the main flow distribution and collection zone 1132 and the battery cell assembly 1110 on the refrigerant heat exchange component 1130 are not overlapped. The arrangement range of the heat exchange zone 1133 on the refrigerant heat exchange component 1130 is large, and the refrigerant flow channel 1134 in the area can be uniformly arranged, and the heat exchange zone 1133 and the battery cell assembly 1110 are oppositely arranged, thus facilitating balanced heat exchange to the battery cell assembly 1110.

The main flow distribution and collection zone 1132 is located between the inlet and outlet zone 1131 and the heat exchange zone 1133, that is, the inlet and outlet zone 1131 and the flow distribution and collection zone are arranged on one side of the heat exchange zone 1133, the whole heat exchange zone 1133 is regular, the refrigerant flow channels 1134 in the inlet and outlet zone 1131 and the main flow distribution and collection zone 1132 cannot extend into a space of the refrigerant flow channels 1134 in the heat exchange zone 1133, the refrigerant flow channels 1134 in the heat exchange zone 1133 cannot be scattered by the refrigerant flow channels 1134 in the inlet and outlet zone 1131 and the main flow distribution and collection zone 1132, and therefore, the refrigerant flow channels 1134 in the heat exchange zone 1133 are arranged more regularly and centralized, the uniformity of temperature distribution of the refrigerant flow channels 1134 can be achieved, and balanced heat exchange to the battery cell assembly 1110 is achieved.

In the embodiments, the refrigerant heat exchange component 1130 is divided into the inlet and outlet zone 1131, the main flow distribution and collection zone 1132, and the heat exchange zone 1133, and the main flow distribution and collection zone 1132 is arranged between the inlet and outlet zone 1131 and the heat exchange zone 1133, so that the heat exchange zone 1133 with high heat exchange capability can be arranged separately from the main flow distribution and collection zone 1132 and the inlet and outlet zone 1131, the refrigerant passages 1134 in the main flow distribution and collection zone 1132 and the inlet and outlet zone 1131 cannot enter the zones of the refrigerant passages 1134 of the heat exchange zones 1133, the distribution of the refrigerant passages 1134 of the heat exchange zones 1133 is more centralized, the arrangement paths of the refrigerant passages 1134 can be simplified, and the uniformity of temperature distribution on the heat exchange zones 1133 is improved; and the heat exchange zones 1133 are configured to be opposite to the battery cell assembly 1110 and exchange heat with the battery cell assembly 1110, thus improving the balanced heat exchange capability of the refrigerant heat exchange component 1130 on the battery cell assembly 1110.

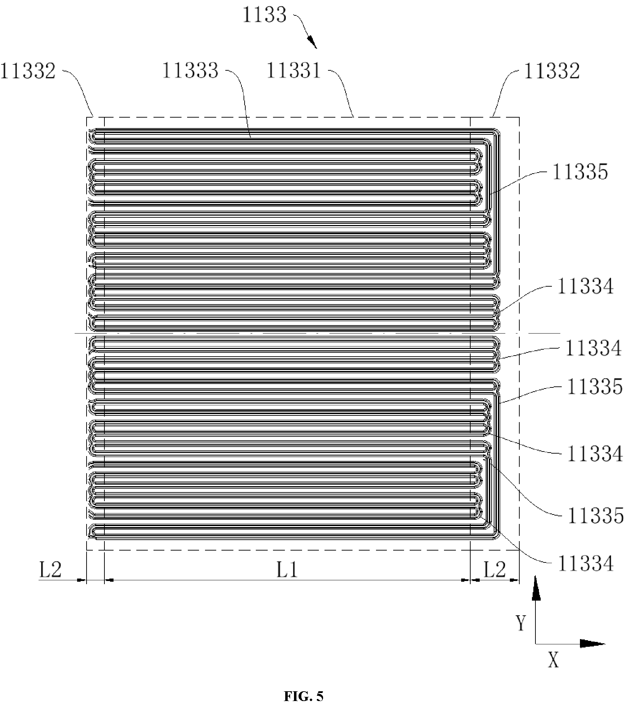

In some embodiments, as shown in FIG. 5, the heat exchange zone 1133 includes a direct flow zone 11331 and a reversing zone 11332; the refrigerant flow channel 1134 in the direct flow zone 11331 is configured to be a plurality of direct flow channel structures 11333 arranged at intervals in a second direction Y, and each direct flow channel structure 11333 extends in a first direction X; the refrigerant flow channel 1134 in the reversing zone 11332 is configured to be a bent flow channel structure 11334 that is in communication with the direct flow channel structures 11333; the second direction Y is perpendicular to the first direction X; and the battery cell assembly 1110 is arranged opposite to the direct flow zone 11331, or, the battery cell assembly 1110 is arranged opposite to the direct flow zone 11331 and the reversing zone 11332.

Specifically, the plurality of direct flow channel structures 11333 are arranged in the direct flow zone 11331, a flow channel extension track of each direct flow channel structure 11333 can be a straight line, the direct flow channel structures 11333 are arranged at intervals and in parallel; the refrigerants in the direct flow zone 11331 can be treated as to flow in a straight line direction; and each direct flow channel structure 11333 can be treated as a linear through hole structure formed in the refrigerant heat exchange component 1130. Each direct flow channel structure 11333 extends in the first direction X, the plurality of direct flow channel structures 11333 are arranged at intervals in the second direction Y, and the second direction Y is perpendicular to the first direction X. The first direction X can be treated as a length direction of the refrigerant heat exchange component 1130 (or the heat exchange surface 11339), and the second direction Y can be treated as a width direction of the refrigerant heat exchange component 1130.

The reversing zone 11332 is configured to change the flowing direction of the refrigerant, the bent flow channel structures 11334 in communication with the direct flow channel structures 11333 are arranged in the reversing zone 11332, for example, one end of each of every two adjacent direct flow channel structures 11333 is in communication through one bent flow channel structure 11334, and the bent flow channels can be in an arc shape, or can be bent in a U shape.

In terms of the arrangement position of the battery cell assembly 1110, the refrigerants flow more stably in the direct flow channel structures 11333, and the bent flow channel structure 11334 enables the flow of the refrigerant to be changed, so that the refrigerant at the position of the bent flow channel structure 11334 has large the flow resistance and unstable flow speed, resulting in non-uniform and unstable temperature distribution in the reversing zone 11332, and therefore, the battery cell assembly 1110 can avoid the reversing zone 11332. For the direct flow channel structure 11333, the length of the direct flow channel structures 11333 extending along the straight line is long, so that the flow of the refrigerant in the direct flow channel structure 11333 is more stable, the flow resistance is relatively small, and the flow speed is stable; therefore, the temperature distribution in the direct flow zone 11331 corresponding to the direct flow channel structures 11333 is more uniform and stable, the battery cell assembly 1110 can be arranged opposite to the direct flow zone 11331, namely, the direct flow zone 11331 on the heat exchange zone 1133 is overlapped with the battery cell assembly 1110 on the refrigerant heat exchange component 1130, thus improving the balanced heat exchange capacity of the refrigerant heat exchange component 1130 on the battery cell assembly 1110.

Because the temperature of the battery cell assembly 1110 close to the end is low relative to the temperature of the battery cell 1112 close to the middle in the first direction X, the reversing zone 11332 can be arranged at the edge position of the heat exchange surface 11339, and the battery cell 1112 in the battery cell assembly 1110 close to the end position is arranged opposite to the reversing zone 11332, thus the overall heat exchange area of the heat exchange zone 1133 on the battery cell assembly 1110 is increased, and energy waste is reduced.

In the embodiments, the direct flow channel structures 11333 and the bent flow channel structure 11334 are arranged, thus the direct flow zone 11331 and the reversing zone 11332 are formed on the heat exchange zone 1133, the temperature distribution uniformity in the direct flow zone 11331 is improved, such that if heat exchange is carried out between the direct flow zone 11331 and the battery cell assembly 1110, the balanced heat exchange on the battery cell assembly 1110 is better improved.

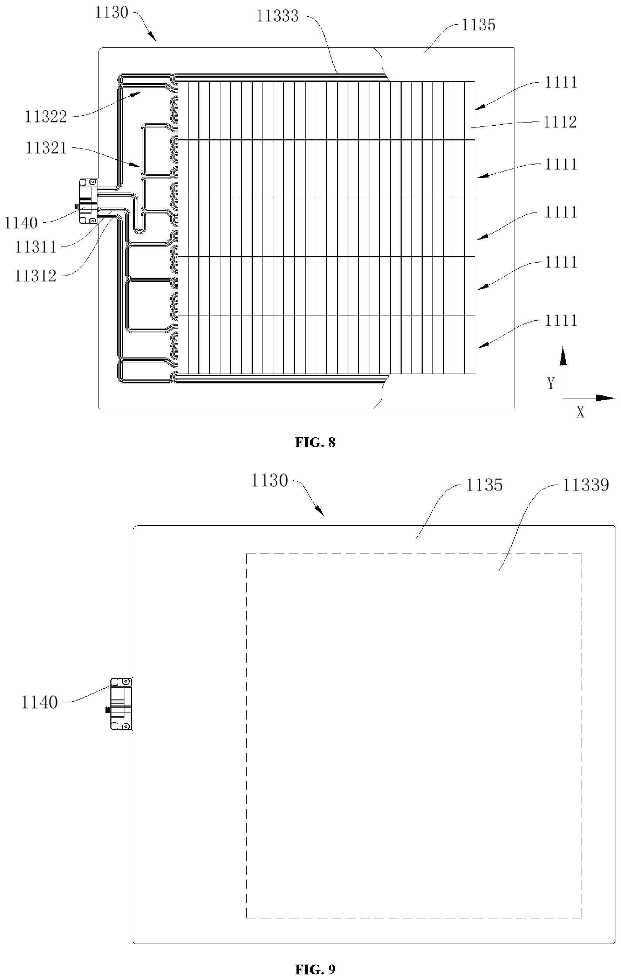

In some embodiments, as shown in FIG. 7 and FIG. 8, the battery cell assembly 1110 includes a plurality of battery cell groups 1111 arranged in the second direction Y, and each battery cell group 1111 includes a plurality of battery cells 1112 stacked in the first direction X.

Specifically, the battery cell group 1111 can be treated as a battery module in the battery cell assembly 1110; because the direct flow channel structures 11333 extend in the first direction X, the plurality of battery cells 1112 in the battery cell group 1111 are stacked and arranged in the first direction X, and the plurality of battery cell groups 1111 are arranged in the second direction Y, such that the arrangement direction of the plurality of battery cells 1112 in each battery cell group 1111 is consistent and matched with the extending direction of the direct flow channel structure, which enables a larger corresponding area between the direct flow channel structure 11333 (namely the direct flow zone 11331) and the battery cell group 1111, namely a larger heat exchange area is achieved.

By means of the direct flow channel structures 11333, the refrigerants can flow through each battery cell 1112, which greatly prevents the battery cell group 1111 from local overheating or supercooling, thereby improving the uniformity of overall temperature distribution of the battery cell group, and reducing the problem of inconsistent performance of the battery cell group 1111 caused by temperature difference; and the direct flow zone 11331 has enough length to perform sufficient heat exchange with each battery cell 1112 in the battery cell group 1111, thus the heat exchange efficiency is improved, and the performance of the refrigerant heat exchange component 1130 is optimized.

In the embodiments, in the second direction Y, the battery cell groups 1111 can cover more direct flow channel structures 11333, and in the first direction X, the battery cell groups 1111 can cover longer direct flow channel structures 11333, thus increasing a corresponding area of the battery cell assembly 1110 and the direct flow zone 11331, increasing the heat exchange area, and further improving the heat exchange efficiency.

In some embodiments, as shown in FIG. 5, the direct flow channel structures 11333 have a first length L1 in the first direction X, a bent flow channel structure 11334 has a second length L2 in the first direction X, and the ratio of the second length L2 to the first length L1 is less than 0.1.

As the direct flow channel structures 11333 extend in the first direction X, it can be known that the first length L1 is the extension length of the direct flow channel structures 11333. In terms of the bent flow channel structure 11334, the second length L2 can be understood as the projection length of the bent flow channel structure 11334 on a plane parallel to the first direction X.

The ratio of the second length L2 to the first length L1 is less than 0.1, so that the length of the bent flow channel structure 11334 in the first direction X is relatively short. As the flow resistance of the refrigerant in the bent flow channel structure 11334 is large and the energy loss is large, the extension length of the bent flow channel structure 11334 is shortened as much as possible, and in contrast, the extension length of the direct flow channel structures 11333 can be relatively increased. In this way, the flow resistance and energy loss of the refrigerant in the reversing zone 11332 can be reduced, and the refrigerant has enough length in the direct flow zone 11331 for sufficient heat exchange, thereby improving the heat exchange efficiency, and optimizing the performance of the refrigerant heat exchange component 1130.

It is to be noted that if the bent flow channel structures 11334 are arranged at different positions, the second length L2 can be understood as a sum of the lengths of the bent flow channel structures 11334 at different positions in the first direction X on the basis of the ratio of the second length L2 to the first length L1.

In the embodiments, the ratio of the first length L1 of the bent flow channel structure 11334 to the second length L2 of the direct flow channel structure 11333 is less than 0.1, so that the purpose of controlling the extension length of the bent flow channel structure 11334 is achieved, the extension length of the direct flow channel structures 11333 is increased, the length and area of the direct flow zone 11331 are increased, and the heat exchange efficiency is improved.

In some embodiments, as shown in FIG. 4 and FIG. 5, the reversing zone 11332 is located at the edge of the heat exchange zone 1133, and/or, the reversing zone 11332 is located between the direct flow zone 11331 and the main flow distribution and collection zone 1132.

It is needed to arrange the heat exchange zone 1133 opposite to the battery cell assembly 1110, so in the battery cell assembly 1110, the temperature of battery cells 1112 located in the middle zone is high, and the temperature of battery cells 1112 at the edge position is low; and the reversing zone 11332 is relatively weak in heat exchange capacity compared with the direct flow zone 11331, so the reversing zone 11332 can be arranged opposite to the battery cells 1112 at the edge position, and the reversing zone 11332 can be located at the edge position of the heat exchange zone 1133.

For example, each direct flow channel structure 11333 extends in the first direction X, and the plurality of direct flow channel structures 11333 are arranged at intervals in the second direction Y, therefore, the direct flow channel has two end parts, one end part is necessarily connected to the bent flow channel structure 11334, and the reversing zone 11332 is located at the end part position, namely the edge position, of the heat exchange zone 1133. The battery cells 1112 at one end in each battery cell group 1111 are arranged opposite to the reversing zone 11332 at the edge position.

For another example, two reversing zones 11332 are arranged; on the basis of the above example, more than three direct flow channel structures 11333 are arranged, thus the bent channel structures 11334 are needed to be connected to two ends of each direct flow channel structure 11333 in the first direction X; therefore, the two reversing zones 11332 are correspondingly located at two end positions of the direct flow zone 11331 respectively; one end of each direct flow channel structure 11333 is connected to the refrigerant flow channels 1134 in the main flow distribution and collection zone 1132, namely, one side of the direct flow zone 11331 is arranged close to the main flow distribution and collection zone 1132, so that the reversing zones 11332 can also be located between the direct flow zone 11331 and the main flow distribution and collection zone 1132. The battery cell assembly 1110 is distributed in the heat exchange zone 1133, so the edge of the heat exchange zone 1133 can be formed at the position of the heat exchange zone 1133 close to the main flow distribution and collection zone 1132; and battery cells 1112 close to the edge position in the battery cell assemblies 1110 also correspond to the edge of the heat exchange zone 1133. The two reversing zones 11332 are arranged at two ends of the direct flow zone 11331, so that the flowing effect of the refrigerant in the heat exchange zone 1133 can be further strengthened and the comprehensiveness and the efficiency of heat exchange are improved.

In the embodiments, the reversing zone 11332 is arranged at the edge of the heat exchange zone 1133 or between the direct flow zone 11331 and the main flow distribution and collection zone 1132 so as to correspond to a battery cell 1112 at the edge position, and therefore the balanced heat dissipation effect is improved.

In some embodiments, as shown in FIG. 4, the reversing zone 11332 also include a secondary flow distribution and collection structure 11335 which is connected between part of the bent channel structures 11334 and parts of the direct flow channel structures 11333.

The direct flow channel structures 11333 include the upstream flow channels 11337 and the downstream flow channels 11338 which are opposite in flowing direction, and part of the upstream flow channels 11337 are in communication with the corresponding part of the downstream flow channels 11338, in which, in the first direction X, outlets of part of the downstream flow channels 11338 are located at one end close to the main flow distribution and collection zone 1132, and outlets of the other part of the downstream flow channels 11338 are located at the other end away from the main flow distribution and collection zone 1132, so it is needed to connect the part of the downstream flow channels 11338 with the outlets at the other end with the bent flow channel structure 11334, and the bent flow channel structure 11334 is needed to be guided to the downstream flow channels 11338 with the outlets close to the main flow distribution and collection zone 1132 through the secondary flow distribution and collection structure 11335, and the secondary flow distribution and collection structure 11335 plays a role in flow guiding and collecting.

As described above, if there is a large number of the downstream flow channels 11338 with the outlets at the other end away from the main flow distribution and collection zone 1132, correspondingly, the secondary flow distribution and collection structures 11335 can provided with corresponding number, and the plurality of secondary flow distribution and collection structure 11335 can be connected to the downstream flow channels 11338 with the outlets at one end close to the main flow distribution and collection zone 1132 to play a role in flow distribution and collecting.

For example, as shown in FIG. 4 and FIG. 6, the plurality of direct flow channel structures 11333 extend in the first direction X and are arranged at intervals in the second direction Y; in the first direction X, the main flow distribution and collection zone 1132 is located on the left side of the direct flow channel 11331, thus the upstream flow channels 11337 flow rightwards in the first direction X, and the downstream flow channels 11338 flow leftwards in the first direction X, the two downstream flow channels 11338 are arranged at two ends in the second direction Y, and the outlets of the two downstream flow channels 11338 are located at the left ends and are in communication with refrigerant flow channels 1134 of the main flow distribution and collection zone 1132; and the outlets of the other downstream flow channels 11338 are all formed in the right ends; and therefore, the secondary flow distribution and collection structures 11335 are arranged, the outlets of the other downstream flow channels 11338 are in communication with the two downstream flow channels 11338 located at the two ends through the secondary flow distribution and collection structures 11335.

In the embodiments, the secondary flow distribution and collection structures 11335 are additionally arranged, which facilitates the flow channels that are configured to perform backflow in the direct flow channel structures 11333 to communicate and perform flow collection, thus facilitating guiding and collecting to the refrigerant which flows back.

In some embodiments, as shown in FIG. 4, the heat exchange zone 1133 has a third length L3 in the first direction X, the refrigerant heat exchange component 1130 has a fourth length L4 in the first direction X, and the ratio of the third length L3 to the fourth length L4 is greater than or equal to 0.6 and less than 1.

Specifically, the first direction X can be understood as the length direction of the heat exchange zone 1133, and the inlet and outlet zone 1131, the main flow distribution and collection zone 1132, and the heat exchange zone 1133 can also be arranged in the first direction X. The refrigerant flow channel 1134 in the heat exchange zone 1133 is configured to exchange heat with the battery cell assembly 1110, and therefore the surface of the heat exchange zone 1133 opposite to the battery cell assembly 1110 forms a heat exchange surface 11339, and the third length L3 can be understood as the length of the heat exchange surface 11339 in the first direction X. If the heat exchange zone 1133 includes the direct flow zone 11331 and the reversing zone 11332, the third length L3 can also be understood as the sum of the lengths of the direct flow zone 11331 and the reversing zone 11332 in the first direction X, that is, the third length L3 is the sum of the first length L1 and the second length L2.

The fourth length L4 is the length of the refrigerant heat exchange member 1130, and it is understood that the length of the refrigerant heat exchange member 1130 is the length thereof in the first direction X; for example, the refrigerant heat exchange member 1130 has at the first surface 1135, and a partial zone of the first surface 1135 (the heat exchange surface 11339) is disposed opposite to the battery cell assembly 1110, and thus the length of the refrigerant heat exchange member 1130 is the length of the first surface 1135 in the first direction X.

The ratio of the third length L3 to the fourth length L4 can be understood as the ratio of the length of the heat exchange surface 11339 to the length of the first surface 1135 in the first direction X, that is, the ratio of the heat exchange zone 1133 to the sum of the inlet and outlet zone 1131, the main flow distribution and collection zone 1132, and the heat exchange zone 1133; and if the width of the refrigerant heat exchange member 1130 in the second direction Y is the same, the ratio of the heat exchange zone 1133 to the sum of the inlet and outlet zone 1131, the main flow distribution and collection zone 1132, and the heat exchange zone 1133 can also be understood as the ratio of the area of the heat exchange zone 1133 to the sum of the areas of the inlet and outlet zone 1131, the main flow distribution and collection zone 1132, and the heat exchange zone 1133, that is, the proportion of the heat exchange zone 1133 over the first surface 1135 of the whole refrigerant heat exchange member 1130.

In this example, the ratio of the third length L3 to the fourth length L4 is controlled to be 0.6-1.0 and not equal to 1.0, and the ratio shows that the heat exchange zone 1133 occupies a larger proportion in the refrigerant heat exchange component 1130, which is beneficial for enabling the battery cell assembly 1110 and the refrigerant heat exchange component 1130 to have a sufficient contact area for heat exchange, improving the performance of a heat management system and effectively controlling the temperature of the battery cell 1112. It is to be noted that he ratio of the third length L3 to the fourth length L4 can be any numerical value except 1 in the range of 0.6 to 1.0.

For example, the ratio of the third length L3 to the fourth length L4 is 0.875, and if the numerical value is 0.875 in practical application, the refrigerant heat exchange component 1130 can have a sufficiently large heat exchange surface 11339, so that the energy loss is lower, and the refrigerant heat exchange component 1130 can have a better balanced heat exchange effect.

In the embodiments, the proportion of the heat exchange zone 1133 on the refrigerant heat exchange component 1130 is controlled to be greater than or equal to 0.6 and less than 1, therefore, the heat exchange zone 1133 can have a large proportion in the refrigerant heat exchange component 1130, the battery cell assembly 1110 and the refrigerant heat exchange component 1130 can have enough contact area for heat exchange, thereby improving the heat exchange efficiency.

In some embodiments, as shown in FIG. 7 to FIG. 9, the heat exchange zone 1133 is provided with a heat exchange surface 11339 opposite to the battery cell assembly 1110, and the refrigerant flow channel 1134 in the heat exchange zone 1133 is configured to be opposite to the heat exchange surface 11339; and the ratio of a projection area S1 of the refrigerant flow channel 1134 in the heat exchange zone 1133 on the heat exchange surface 11339 to the area S2 of the heat exchange surface 11339 is greater than or equal to 0.4 and less than or equal to 0.8.

Specifically, the heat exchange surface 11339 is a partial zone of the first surface 1135 of the refrigerant heat exchange component 1130, and the heat exchange surface 11339 is a surface of the heat exchange zone 1133 which is opposite to and matched with the battery cell assembly 1110 and is configured to perform heat exchange.

In terms of the refrigerant heat exchange component 1130, the refrigerant flow channels 1134 in the heat exchange zone 1133 are arranged opposite to the heat exchange surface 11339. A gap is formed between every two adjacent refrigerant flow channels 1134, so the arrangement area of the refrigerant flow channels 1134 is less than the area of the heat exchange surface 11339, but the heat exchange capability and effect are influenced if the arrangement area of the refrigerant flow channels 1134 is too small; and if the arrangement area of the refrigerant flow channels 1134 is too large, namely the arrangement density of the refrigerant flow channels 1134 is relatively high, the strength of a spacing part between every two adjacent refrigerant flow channels 1134 will be influenced, so that it is needed to control the proportion of the refrigerant flow channels 1134 in the heat exchange zone 1133 reasonably.

Therefore, in the embodiments, the ratio of the projection area S1 of the refrigerant flow channels 1134 in the heat exchange zone 1133 on the heat exchange surface 11339 to the area S2 of the heat exchange surface 11339 is greater than or equal to 0.4 and less than or equal to 0.8, and the ratio can be any numerical value between 0.4 and 0.8, for example, the ratio can be 0.5, 0.6, 0.7, and the like. The ratio between 0.4 and 0.8 makes the spacing distance L5 between every two adjacent refrigerant flow channels 1134 more reasonable, namely the thickness of the flow channel wall is more reasonable, and the flow channel wall is not easily broken down by the refrigerant.

In the embodiments, the projection area ratio of the refrigerant flow channels 1134 on the surface of the heat exchange zone 1133 is reasonably controlled to ensure an enough heat exchange area between the refrigerant and the battery cell 1112, thereby reducing the risk that the refrigerant flow channels 1134 are distributed densely or sparsely, improving the heat exchange effect, as well as facilitating the design and the manufacturing of the refrigerant flow channel 1134.

In some embodiments, as shown in FIG. 4, the spacing distance L5 between every two adjacent direct flow channel structures 11333 is 5-15 mm in the second direction Y.

The refrigerant flows in the direct flow channel structures 11333 and generates an extrusion force on the flow channel wall, and moreover, the heat exchange mode of the refrigerant heat exchange component 1130 is direct cooling, so that the interior of the direct flow channel structures 11333 has pressure and the pressure is also generated on the flow channel wall; therefore, the flow channel wall between two adjacent direct flow channel structures 11333 needs enough supporting force.

The spacing distance L5 between the two adjacent direct flow channel structures 11333 can be understood as a distance between two flow channel wall surfaces, which are arranged close to each other, of the two adjacent direct flow channel structures 11333, namely the thickness of the flow channel wall; in order to enable the flow channel wall to resist the extrusion force of the refrigerant and the pressure in the flow channel, the spacing distance L5 between the two adjacent direct flow channel structures 11333 is 5-15 mm, namely, the thickness of the flow channel wall between the two adjacent direct flow channel structures 11333 is 5-15 mm; the thickness of the flow channel wall can be any numerical value between 5 mm and 15 mm, for example, the thickness of the flow channel wall can be any numerical value between 5 mm and 10 mm.

In addition, the spacing distance L5 of 5 mm to 15 mm allows the plurality of direct flow channel structures 11333 to have enough coverage area in the heat exchange zone 1133, so that the projection area of the refrigerant flow channel 1134 on the heat exchange surface 11339 is increased, and further the arrangement density of the refrigerant flow channel 1134 is improved, thereby achieving the aim of making temperature distribution in the heat exchange zone 1133 uniform.

In the embodiments, the spacing distance L5 of 5-15 mm allows a space for the refrigerant to flow between the direct flow channel structures 11333 and also enables effective heat exchange of the adjacent direct flow channel structures 11333 to the battery cell assembly 1110, thus reducing the risk of insufficient heat exchange caused by too large spacing or excessive flow resistance caused by too small spacing.

In some embodiments, as shown in FIG. 4, the width L6 of the refrigerant flow channel is greater than or equal to 6 mm and is less than or equal to 15 mm.

The contact area between the refrigerant and the battery cell 1112 will be reduced if the refrigerant flow channel 1134 is too wide, it is because that the increase in the width of the refrigerant flow channel 1134 means that the number of flow channels is reduced in the same heat exchange zone 1133. Moreover, if the refrigerant flows in a wider refrigerant flow channel 1134, the flow velocity of the refrigerant will be reduced, consequently, the heat taken away in unit time will be reduced, the heat generated by the battery cell 1112 cannot be effectively transferred out in time, resulting in influence on the heat dissipation effect of a battery and failure in maintaining a proper working temperature for the battery. If the refrigerant flow channel 1134 is too narrow, the flowing space of the refrigerant will be narrow, the flow will be limited, and the heat dissipation effect is influenced.

Specifically, the refrigerant flow channel 1134 can include one or more independent channels or channels in communication; that the width L6 of the refrigerant flow channel is greater than or equal to 6 mm and less than or equal to 15 mm refers to that the width of one refrigerant flow channel is greater than or equal to 6 mm and less than or equal to 15 mm, for example, the width L6 of the refrigerant flow channels in the inlet and outlet zone 1131, the main flow distribution and collection zone 1132, and the heat exchange zone 1133 is greater than or equal to 6 mm and less than or equal to 15 mm.

The section of the refrigerant flow channel 1134 can be in various shapes, such as a circle, an ellipse, and a polygon, for example, if the section of the refrigerant flow channel 1134 is in the circle shape, the width L6 of the refrigerant flow channel is greater than or equal to 6 mm and less than or equal to 15 mm, and the diameter of the refrigerant flow channel 1134 is greater than or equal to 6 mm and less than or equal to 15 mm; for another example, the section shape of the refrigerant flow channel 1134 is in the ellipse shape, the width L6 of the refrigerant flow channel is greater than or equal to 6 mm and less than or equal to 15 mm, and the length of a long axis or a short axis of the refrigerant flow channel 1134 is greater than or equal to 6 mm and less than or equal to 15 mm; and for yet another example, the section of the refrigerant flow channel 1134 is in the rectangle shape, the width L6 of the refrigerant flow channel is greater than or equal to 6 mm and less than or equal to 15 mm, and the width of the rectangle is greater than or equal to 6 mm and less than or equal to 15 mm.

The cold flow channel width of 6-15 mm will optimize the heat exchange efficiency, and such width distance enables a sufficient heat exchange between the refrigerant and the battery cell 1112 when flowing in the direct flow channel structure 11333, and can also realize efficient heat transfer while ensuring the flow of the refrigerant, so that heat generated by the battery cell 1112 can be taken away by the refrigerant in time, and the proper working temperature of the battery is maintained.

The flow channel width of 6-15 mm can also balance the fluid resistance, and such width distance is beneficial to balancing the flowing resistance of the refrigerant. For example, the width L6 of the refrigerant flow channel can be any numerical value between 6 mm and 15 mm, and if the interval is proper, the refrigerant will flow smoothly in the refrigerant flow channel 1134, and the energy consumption of a pump cannot be increased due to overlarge resistance generated by too narrow refrigerant flow channel 1134; and the flow velocity of the refrigerant cannot be too low due to too wide refrigerant flow channel 1134, and the heat dissipation efficiency cannot be influenced. Therefore, on the premise of ensuring the heat dissipation effect, the energy consumption of the whole cooling system can be reduced, and the energy utilization efficiency can be improved.

In the embodiment, due to the flow channel width of 6-15 mm, the flow velocity, flow rate, flow resistance, and the pressure drop of the refrigerant, the flowing state of the refrigerant in the refrigerant flow channels 1134 is good, which is beneficial for improving heat exchange efficiency, while not increasing costs or affecting thermal management performance due to the refrigerant flow channels 1134 being too wide or too narrow.

In some embodiments, as shown in FIG. 4, a plurality of cavities 1138 are formed in the refrigerant heat exchange component 1130, and each cavity 1138 is not in communication with the refrigerant flow channel 1134.

Specifically, the cavities 1138 can be understood as hollow spaces inside the refrigerant heat exchange component 1130, for example, during the manufacturing process of the refrigerant heat exchange component 1130, the refrigerant heat exchange component 1130 includes an upper plate and a lower plate which are welded and fixed to each other, and a large amount of gas will be generated during welding. If the gas cannot be discharged in time, defects such as air holes will be formed in a weld joint to reduce the welding quality and the sealing performance of the weld joint. The cavities 1138 serve as structural cavities and can provide a discharge channel for the gas generated during welding, thus the gas can be smoothly discharged, welding defects caused by gas accumulation are reduced, the welding quality and reliability are guaranteed, the sealing property of the refrigerant heat exchange component 1130 is improved, and the risk of refrigerant leakage is reduced.

In addition, the plurality of cavities 1138 are additionally arranged in the space outside the refrigerant flow channel 1134, so that the overall structural strength of the refrigerant heat exchange component 1130 can be improved. Due to the cavities 1138, the overall structure of the refrigerant heat exchange component 1130 is changed, and the refrigerant heat exchange component 1130 has better mechanical properties. From the mechanical perspective, the cavities 1138 can be used as a reinforcing structure to effectively improve the bending strength and compressive strength of the refrigerant heat exchange component 1130. If the refrigerant heat exchange component 1130 is subjected to an external force, the cavities 1138 can disperse stress and reduce the stress concentration phenomenon, thus the refrigerant heat exchange component 1130 can bear a larger external force without deformation or damage, the stability and the reliability of the whole battery apparatus 1100 can be improved, and the service life of the battery apparatus 1100 can be prolonged.

In the embodiments, the plurality of cavities 1138 are formed, thus flow guide and exhaust effects can be achieved during the welding process, the welding quality and welding sealing performance can be improved, and moreover, the overall structural strength of the refrigerant heat exchange component 1130 can be improved.

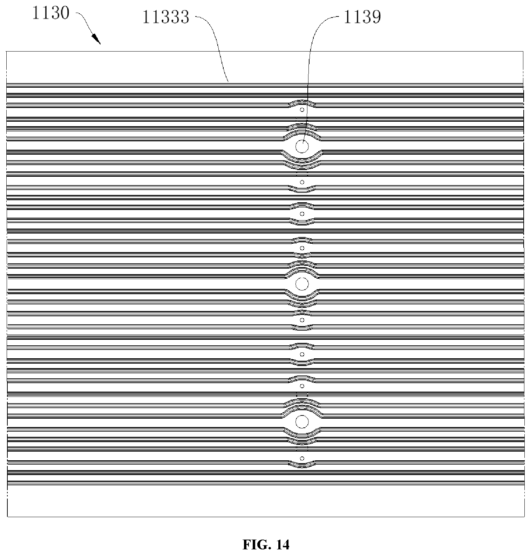

In some embodiments, as shown in FIG. 14, a plurality of mounting holes 1139 are formed in the refrigerant heat exchange component 1130, and the mounting holes 1139 are distributed in the heat exchange zone 1133 and avoid the refrigerant flow channels 1134.

Specifically, the mounting holes 1139 facilitate stable connection between the refrigerant heat exchange component 1130 and other structures in the battery apparatus 1100, for example, by means of connecting members such as bolts and rivets in the mounting holes 1139 in a penetrating mode, the refrigerant heat exchange component 1130 can be mounted at a specific position of the box body assembly 1120 or the vehicle 1000, the fixing effect on the refrigerant heat exchange component 1130 is achieved, and vibration, displacement and the like of the refrigerant heat exchange component 1130 during the operation process of the battery apparatus 1100 can be reduced.

The mounting holes 1139 can be formed in the heat exchange zone 1133, for example, the mounting holes 1139 are formed in the middle zone of the heat exchange zone 1133 in the first direction X, the mounting holes 1139 can be formed between the two refrigerant flow channels 1134 and are not in communication with the refrigerant flow channels 1134, the diameter of the mounting holes 1139 can be greater than the spacing distance L5 between the two adjacent refrigerant flow channels 1134, and thus avoidance bending can be carried out at the positions of the refrigerant flow channels 1134 opposite to the mounting holes 1139, that is, the refrigerant flow channels 1134 are bent at the positions of the refrigerant flow channels 1134 opposite to the mounting holes 1139, for example, a semicircular bent shape is formed.

In the embodiments, by means of arranging the mounting holes 1139, the refrigerant heat exchange component 1130 and other components can be conveniently connected and fixed through locking members such as bolts, thereby facilitating the connection between the refrigerant heat exchange component 1130 and other components.

In some embodiments, as shown in FIG. 4 and FIG. 6, the inlet and outlet zone 1131, the main flow distribution and collection zone 1132, and the heat exchange zone 1133 are sequentially arranged in the first direction X; the refrigerant flow channels 1134 in the inlet and outlet zone 1131 includes first-flow-direction flow channels 11311 and second-flow-direction flow channels 11312, and the refrigerants in the first-flow-direction flow channels 11311 have the flowing direction opposite to that of the refrigerants in the second-flow-direction flow channels 11312; the refrigerant flow channel 1134 in the main flow distribution and collection zone 1132 includes a first flow channel 11321 and a second flow channel 11322, and the refrigerant flow channels 1134 in the heat exchange zone 1133 include the upstream flow channels 11337 and the downstream flow channels 11338 which are in communication with each other; and the first-flow-direction flow channels 11311, the first flow channel 11321, and the upstream flow channels 11337 are sequentially arranged in a communicating mode, and the second-flow-direction flow channels 11312, the second flow channel 11322, and the downstream flow channels 11338 are sequentially arranged in a communicating mode.

Specifically, that the refrigerants in the first-flow-direction flow channels 11311 have the flowing direction opposite to that of the refrigerants in the second-flow-direction flow channels 11312 refers to that if the flowing direction in the first-flow-direction flow channels 11311 is inflow, the flowing direction in the second-flow-direction flow channels 11312 is outflow, or, if the flowing direction of the first-flow-direction flow channels 11311 is an outflow direction, the flowing direction of the second-flow-direction flow channels 11312 is an inflow direction. Each first-flow-direction flow channel 11311 and each second-flow-direction flow channel 11312 are correspondingly in communication with the refrigerant flow channel 1134 having the flowing direction opposite to that of the main flow distribution and collection zone 1132, that is, the first-flow-direction flow channels 11311 are in communication with the first flow channel 11321, and the second-flow-direction flow channels 11312 are in communication with the second flow channel 11322. The flowing directions of the first-flow-direction flow channels 11311 and the second-flow-direction flow channels 11312 can be parallel to the first direction X.

The first flow channel 11321 and the second flow channel 11322 are two flow channels having opposite flowing directions in the main flow distribution and collection zone 1132, the first flow channel 11321 is connected between the first-flow-direction flow channels 11311 and the upstream flow channels 11337 and can play a role in flow distribution (or flow collection), and the second flow channel 11322 is connected between the second-flow-direction flow channels 11312 and the downstream flow channels 11338 and can play a role in flow collection (or flow distribution). The first flow channel 11321 and the second flow channel 11322 can both include a plurality of branch flow channels.

The upstream flow channels 11337 are in communication with the downstream flow channels 11338, heat exchange inlets are formed in the end of the upstream flow channels 11337 away from the downstream flow channels 11338 and are in communication with the first flow channel 11321; heat exchange outlets are formed in the ends of the downstream flow channels 11338 away from the upstream flow channel 11337 and are in communication with the second flow channel 11322, and therefore the refrigerant enters the upstream flow channels 11337 through the heat exchange inlets, then flows to the downstream flow channels 11338 and flows out through the heat exchange outlet to form circulating heat exchange.

The inlet and outlet zone 1131, the main flow distribution and collection zone 1132, and the heat exchange zone 1133 are sequentially arranged in the first direction X, and therefore the heat exchange flow channels in the inlet and outlet zone 1131, the main flow distribution and collection zone 1132, and the heat exchange zone 1133 are sequentially arranged in the first direction X, and zones with different functions on the refrigerant heat exchange component 1130 are in a regular form of partition arrangement.

In the embodiments, the inlet and outlet zone 1131, the main flow distribution and collection zone 1132, and the heat exchange zone 1133 are arranged more regularly, the battery cell assembly 1110 and the heat exchange zone 1133 are oppositely arranged, and therefore targeted centralized heat exchange can be achieved, and the balance of heat exchange can be improved.

In some embodiments, as shown in FIG. 6, the refrigerant flow channels 1134 in the heat exchange zone 1133 include a plurality of heat exchange flow sub-channels 11336 arranged in parallel, and each heat exchange flow sub-channel 11336 includes the upstream flow channels 11337 and the downstream flow channels 11338; the upstream flow channels 11337 in part of the heat exchange flow sub-channels 11336 are adjacent to and in heat conduction fit with the downstream flow channels 11338 in the adjacent heat exchange flow sub-channels 11336; and the downstream flow channels 11338 in part of the heat exchange flow sub-channels 11336 are adjacent to and in heat conduction fit with the upstream flow channels 11337 in the adjacent heat exchange flow sub-channels 11336.

As shown in FIG. 6, the refrigerant flow channel 1134 in the heat exchange zone 1133 includes the plurality of heat exchange flow sub-channels 11336, each heat exchange flow sub-channel 11336 forms a heat exchange loop, that is, one heat exchange flow sub-channel 11336 has a heat exchange inlet and a heat exchange outlet, and the upstream flow channels 11337 and the downstream flow channels 11338 in each heat exchange flow sub-channel 11336 are in communication.

It is to be noted that the upstream flow channels 11337 and the downstream flow channels 11338 can be understood as the direct flow channel structures 11333, and the connected parts between the upstream flow channels 11337 and the downstream flow channels 11338 are connected can be understood as the bent flow channel structure 11334.

It is assumed that the downstream flow channels 11338 in the plurality of heat exchange flow sub-channels 11336 are arranged in a centralized manner, the refrigerant heat exchange component 1130 will form a large-area overheated zone on the heat exchange surface 11339 zone corresponding to the downstream flow channels 11338, and the overheated zone refers to a zone with weak heat exchange capability; and if the overheated zone is too large, it will affect the overall heat exchange effect on the battery cell assembly 1110, resulting in temperature rise of the battery cell assembly 1110, thereby affecting the use performance and the service life of the battery cell assembly 1110 and the battery apparatus 1100.

By analyzing the overheating problem, the result shows that the heat exchange capacity of the refrigerants in the upstream flow channels 11337 is high, the temperature of the zone of the heat exchange surface 11339 corresponding to the upstream flow channels 11337 is low, the heat exchange capacity of the refrigerants in the downstream flow channel 11338 is relatively weak, and the temperature of the zone of the heat exchange surface 11339 corresponding to the downstream flow channels 11338 is high; therefore, in order to reduce the area of the overheated zone, the plurality of heat exchange flow sub-channels 11336 in the refrigerant heat exchange flow channel are arranged side by side, the upstream flow channels 11337 in part of the heat exchange flow sub-channels 11336 are adjacent to and in heat conduction fit with the downstream flow channels 11338 in the adjacent heat exchange flow sub-channels 11336, the downstream flow channels 11338 in part of the heat exchange flow sub-channels 11336 are adjacent to and in heat conduction fit with upstream flow channels 11337 in the adjacent heat exchange flow sub-channels 11336, namely, the upstream flow channels 11337 and the downstream flow channels 11338 in every two adjacent heat exchange flow sub-channels 11336 are adjacently arranged; and heat conduction fit refers to that heat conduction (or heat exchange) can be conducted between the adjacent upstream flow channels 11337 and downstream flow channels 11338, and it can also be understood that because the upstream flow channels 11337 and the downstream flow channels 11338 are adjacently arranged, heat conduction (or heat exchange) can be conducted between the zone of the heat exchange surface 11339 corresponding to the upstream flow channels 11337 and the zone of the heat exchange surface 11339 corresponding to the downstream flow channels 11338.

Due to the heat conduction fit between the upstream flow channels 11337 and the downstream flow channels 11338, the low temperature of the upstream flow channels 11337 enables the high temperature of the downstream flow channels 11338 to be balanced, that is, a low-temperature zone on the heat exchange surface 11339 corresponding to the upstream flow channels 11337 enables the high temperature of a high-temperature zone on the heat exchange surface 11339 corresponding to the downstream flow channels 11338 to be balanced, and thus the temperature difference of the heat exchange surface 11339 on the refrigerant heat exchange component 1130 can be reduced; the temperature of the zones on the heat exchange surface 11339 corresponding to the downstream flow channels 11338 adjacent to the upstream flow channels 11337 is not liable to rise excessively; and if the temperature is relatively reduced, an overheated zone is not liable to form, and thus the temperature distribution on the heat exchange surface 11339 is more balanced. Thus, the upstream flow channels 11337 and the downstream flow channel 11338 in two adjacent heat exchange flow sub-channels 11336 correspondingly form a temperature equalizing zone on the heat exchange surface 11339.

It is to be noted that the upstream flow channels 11337 and the downstream flow channels 11338 in the plurality of heat exchange flow sub-channels 11336 can be opposite to the heat exchange surface 11339, heat exchange media in the upstream flow channels 11337 and the downstream flow channel 11338 can exchange heat with the heat exchange surface 11339, and then the heat exchange surface 11339 exchanges heat with the battery cell assembly 1110.

The battery cell assembly 1110 can directly make contact with the heat exchange surface 11339 of the refrigerant heat exchange component 1130 for heat exchange, or, the battery cell assembly 1110 and the heat exchange surface 11339 are arranged in a spaced mode, the battery cell assembly 1110 is arranged close to the heat exchange surface 11339, and therefore the refrigerant heat exchange component 1130 can exchange heat with the battery cell assembly 1110 through the heat exchange surface 11339, thus achieving the purpose of cooling the battery cell assembly 1110.

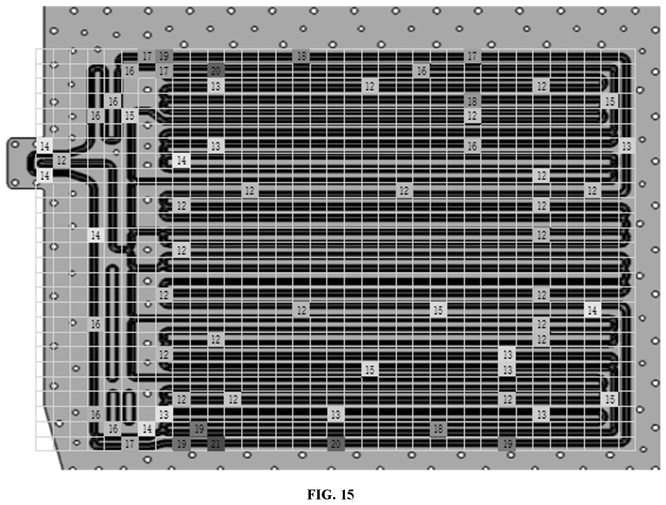

In combination with schematic diagram of temperature distribution of the refrigerant heat exchange flow channel in FIG. 15, it can be obviously found that the temperature of the downstream flow channels 11338 adjacent to the upstream flow channels 11337 is obviously balanced, and as shown in FIG. 15, the larger the number, the higher the temperature, and the lower the number.

In the embodiments, the upstream flow channels 11337 and the downstream flow channels 11338 in the two heat exchange flow sub-channels 11336 are adjacently arranged, such that the low temperature of the upstream flow channels 11337 can balance the high temperature of the downstream flow channels 11338, the temperature of the zone of the heat exchange surface 11339 corresponding to the downstream flow channels 11338 decreases, and therefore the overheated zone is not likely to be formed, the area of the overheated zone is relatively reduced, the heat exchange effect on the battery cell assembly 1110 can be improved, the uniformity temperature distribution on the heat exchange surface 11339 of the refrigerant heat exchange component 1130 is improved, thereby improving the heat exchange uniformity of the battery cell assembly 1110.

In some embodiments, as shown in FIG. 6, the plurality of heat exchange flow sub-channels 11336 are sequentially arranged in the second direction Y, the upstream flow channels 11337 and the downstream flow channels 11338 in the heat exchange flow sub-channels 11336 extend in the first direction X, and the second direction Y is perpendicular to the first direction X.

It is to be noted that the first direction X can be any direction parallel to the heat exchange surface 11339, for example, the first direction X is the length direction (or width direction) of the heat exchange surface 11339, and correspondingly, the second direction Y is the width direction (or length direction) of the heat exchange surface 11339.

Specifically, the first direction X and the second direction Y are both parallel to the heat exchange surface 11339; taking a plate-shaped refrigerant heat exchange component 1130 as an example, the heat exchange surface 11339 can be formed on the part, opposite to the battery cell assembly 1110, of a plate surface of one side of the refrigerant heat exchange component 1130; if the first direction X is the length direction of the plate surface, the second direction Y is the width direction of the plate surface; the upstream flow channels 11337 and the downstream flow channels 11338 extend in the first direction X, thus the upstream flow channels 11337 and the downstream flow channels 11338 are parallel and are arranged at intervals; the extension directions of the upstream flow channels 11337 and the downstream flow channels 11338 are in the length direction of the plate surface; one heat exchange flow sub-channel 11336 can include a plurality of upstream flow channels 11337 and a plurality of downstream flow channels 11338; and the upstream flow channels 11337 and the downstream flow channels 11338 are in communication with each other at one end in the first direction X.

In the embodiments, the upstream flow channels 11337 and the downstream flow channels 11338 extend in the first direction X and are adjacently arranged, thus increasing the length of the adjacent zone between the upstream flow channels 11337 and the downstream flow channels 11338, increasing the adjacent heat exchange area, and improving the heat exchange efficiency.

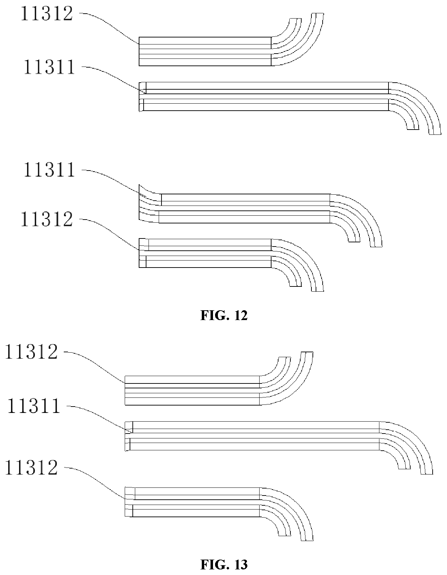

In some embodiments, as shown in FIG. 12 and FIG. 13, at least one first-flow-direction flow channel 11311 is arranged, a plurality of second-flow-direction flow channels 11312 are arranged, and all the first-flow-direction flow channels 11311 are distributed between every two adjacent second-flow-direction flow channels 11312.

Specifically, if a plurality of first-flow-direction flow channels 11311 are arranged, the first-flow-direction flow channels 11311 are arranged adjacently, and all the first-flow-direction flow channels 11311 are distributed between any two second-flow-direction flow channels 11312 in all the second-flow-direction flow channels 11312. For example, the flowing direction of the first-flow-direction flow channels 11311 is the inflow direction, the inflow direction is the entering direction of the refrigerant flow channel 1134 for flowing into the main flow distribution and collection zone 1132, and the flowing direction of the second-flow-direction flow channels 11312 is the outflow direction, so that the plurality of first-flow-direction flow channels 11311 are arranged adjacently and distributed between any two adjacent second-flow-direction flow channels 11312; all the first-flow-direction flow channels 11311 in the inflow direction are distributed between two second-flow-direction flow channels 11312 in the outflow direction, namely the flow channels in the inflow direction are located at the positions close to the center, the flow channels in the outflow direction are located at the positions away from the center, and the first-flow-direction flow channels 11311 are clamped in the middle zone of the two second-flow-direction flow channels 11312, or, all the first-flow-direction flow channels 11311 are wrapped with the second-flow-direction flow channels 11312.

Optionally, for example, the flowing direction of the first-flow-direction flow channels 11311 is the outflow direction, the flowing direction of the second-flow-direction flow channels 11312 is the inflow direction, and all the first-flow-direction flow channels 11311 are arranged adjacently and distributed between any two adjacent second-flow-direction flow channels 11312; all the first-flow-direction flow channels 11311 in the outflow direction are distributed between two second-flow-direction flow channels 11312 in the inflow direction, namely the flow channels in the outflow direction are located at the positions close to the center, the flow channels in the inflow direction are located at the positions away from the center, and the first-flow-direction flow channels 11311 are clamped in the middle zone of the two second-flow-direction flow channels 11312, or, all the first-flow-direction flow channels 11311 are wrapped with the second-flow-direction flow channels 11312.

In the embodiments, the first-flow-direction flow channels 11311 are arranged between two second-flow-direction flow channels 11312 in a centralized manner, thus the mounting space and complexity are reduced, centralized conveying of refrigerants is facilitated, the centralized and compact flow channel layout facilitates integrated mounting with structural components and other components, and thus the integration level and reliability of the whole system can be improved.

In some embodiments, the flowing direction of the refrigerants in the first-flow-direction flow channels 11311 is the entering direction of the refrigerant flow channel 1134 for flowing into the main flow distribution and collection zone 1132.

The flow channel in the inflow direction is located between the flow channels in the two outflow directions, the first-flow-direction flow channels 11311 in the inflow direction are located in the middle, thus the effect that the refrigerants enter the scattered refrigerant flow channel 1134 in the main flow distribution and collection zone 1132 from the middle is achieved, and under such condition, the refrigerant flow channel 1134 in the inflow direction in the main flow distribution and collection zone 1132 can also be correspondingly located in the middle zone of the main flow distribution and collection zone 1132; and because the second-flow-direction flow channels 11312 in the outflow direction are located on the two sides, the refrigerant flow channel 1134 in the outflow direction in the main flow distribution and collection zone 1132 can also be correspondingly located on the two sides or the edge area of the main flow distribution and collection zone 1132, such that the refrigerants in the inflow direction of the inlet and outlet zone 1131 and the main flow distribution and collection zone 1132 can be controlled to be located in the middle, and the refrigerants in the outflow direction can be controlled to be located in the edge position, which makes the overall flowing direction of the refrigerants more centralized and regular.

In addition, the refrigerants in the same flowing direction are more centralized, the flow resistance caused by multiple times of reversing can be reduced, the refrigerant flowing smoothness can be improved, and the flowing efficiency can be improved.

In the embodiment, the above design is conducive to arranging the refrigerant in the inflow direction in the middle zone the refrigerant heat exchange component 1130, which helps increase the flow speed of the refrigerant during flowing and improve the heat exchange efficiency.

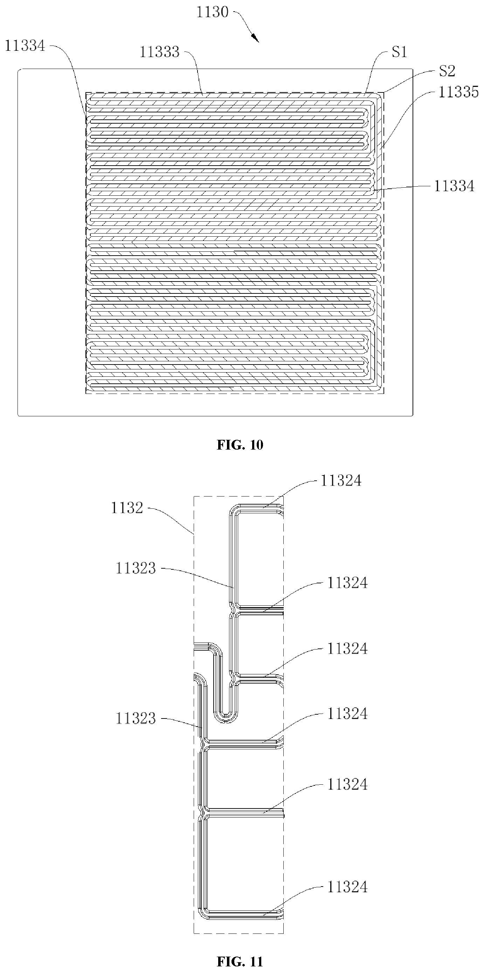

In some embodiments, as shown in FIG. 11, the first flow channel 11321 includes a plurality of first flow distribution channels 11323 and a plurality of second flow distribution channels 11324, and each first flow distribution channel 11323 is in communication with the corresponding second flow distribution channel 11324; the first flow distribution channels 11323 extend in the second direction Y, and each second flow distribution channel 11324 extends in the first direction X; the end of each first flow distribution channel 11323 away from the corresponding second flow distribution channel 11324 is in communication with the refrigerant flow channel 1134 (namely the first-flow-direction flow channel 11311 or the second-flow-direction flow channel 11312) in the inlet and outlet zone 1131, and the end of each second flow distribution channel 11324 away from the corresponding first flow distribution channel 11323 is in communication with the refrigerant flow channel 1134 (namely the upstream flow channel 11337) in the heat exchange zone 1133; and the second direction Y is perpendicular to the first direction X.

Specifically, the first flow distribution channels 11323 are in communication with the second flow distribution channels 11324, and heat exchange media pass through the first flow distribution channels 11323 from the first-flow-direction flow channels 11311, then enter the second flow distribution channels 11324 and correspondingly enter the refrigerant flow channels 1134 (specifically the corresponding upstream flow channels 11337) in the heat exchange zone 1133 through the second flow distribution channels 11324. The first flow distribution channels 11323 and the second flow distribution channels 11324 correspondingly form flow distribution zones on the first surfaces 1135 of the refrigerant heat exchange component 1130.

One or more first flow distribution channels 11323 can be arranged, one first flow distribution channel 11323 is in communication with the plurality of second flow distribution channels 11324, the first flow distribution channels 11323 extend in the second direction Y, the extension length direction of the first flow distribution channels 11323 is the same as the arrangement direction of all heat exchange flow sub-channels 11336; and it is assumed that the flowing direction of the first flow distribution channels 11323 is the inflow direction, the heat exchange media can flow more smoothly in the first flow distribution channels 11323, the flowing path of the refrigerant entering the second flow distribution channels 11324 and the upstream flow channels 11337 is reduced, thus reducing the heat exchange losses.

Each second flow distribution channel 11324 extends in the first direction X, that is, all the second flow distribution channels 11324 are arranged in parallel and at intervals, each second flow distribution channel 11324 perpendicularly is in communication with the corresponding first flow distribution channel 11323, each upstream flow channel 11337 extends in the first direction X, thus each second flow distribution channel 11324 is opposite to the corresponding upstream flow channel 11337, such that the heat exchange media can flow into all the upstream flow channels 11337 more smoothly through all the second flow distribution channels 11324, the flowing path of the heat exchange medium entering the upstream flow channels 11337 can be shortened, and heat losses are reduced.

The heat exchange media (namely the refrigerant) enter the refrigerant heat exchange component 1130, aiming to reduce the temperature difference problem of the refrigerant heat exchange component 1130 caused by uneven flow distribution; the flow distribution of the heat exchange media is prone to being influenced by the dryness of the heat exchange media, the larger the dryness, the more difficult flow distribution, and the dryness is the minimum when the heat exchange media enter the refrigerant heat exchange component 1130; and therefore, if performing flow distribution in this zone, the heat exchange media are affected the least; this zone is generally divided into the plurality of second flow distribution channels 11324, and thus the plurality of upstream flow channels 11337 can be arranged, the influence of the heat exchange capacity difference of a certain heat exchange flow sub-channel 11336 on cold plate temperature equalizing can be reduced; and the upstream flow channels 11337 and downstream flow channels 11338 in any two adjacent heat exchange flow sub-channels 11336 can be balanced, thus further improving the temperature equalizing performance of the refrigerant heat exchange component 1130. The effective lengths of the plurality of heat exchange flow sub-channels 11336 are kept consistent, thus the flow distribution uneven influence caused by the flow resistance difference in each first flow distribution channel 11323 and the second flow distribution channel 11324 is reduced, and therefore the temperature difference on the refrigerant heat exchange component 1130 (or the first surface 1135) is further reduced, and the temperature equalizing performance of the refrigerant heat exchange component 1130 is improved.

The sectional areas of the first flow distribution channels 11323 and the second flow distribution channels 11324 are equal to the sectional area of the upstream flow channels 11337, namely, the sectional area of the upstream flow channels 11337, the sectional area of the downstream flow channels 11338, the sectional area of the first flow distribution channels 11323, and the sectional area of the second flow distribution channels 11324 are equal, so that the flow resistance of the refrigerants entering the second flow distribution channels 11324 through the first flow distribution channels 11323 and the flow resistance of the refrigerants entering the upstream flow channels 11337 through the second flow distribution channels 11324 are reduced.

In the embodiments, the first flow distribution channels 11323 are in communication with the second flow distribution channels 11324, and the first flow distribution channels 11323 extends in the second direction Y to be consistent with the arrangement direction of each heat exchange flow sub-channel 11336, thus improving the flowing smoothness of the heat exchange media; each second flow distribution channel 11324 is perpendicular to the corresponding first flow distribution channel 11323, and each second flow distribution channel 11324 is opposite to the corresponding upstream flow channel 11337, thus the flowing smoothness of the heat exchange media can be improved, the flowing path of the heat exchange media can be reduced, and the heat exchange loss is reduced.

In some embodiments, as shown in FIG. 2, the box body assembly 1120 includes the box body 1121 with the opening, and the refrigerant heat exchange component 1130 is connected to the box body 1121 and covers the opening to form the accommodating cavity 1124; and the refrigerant heat exchange component 1130 is arranged opposite to the battery cell assembly 1110.

Specifically, the box body 1121 can include the cover body 1122 and the box frame 1123 which are mutually covered; the opening is formed in the side of the box frame 1123 opposite to the cover body 1122, and it can be understood as that the cover body 1122 and the box frame 1123 can be connected to form the groove structure with the opening; the cover body 1122, the box frame 1123, and the refrigerant heat exchange component 1130 jointly define the accommodating cavity 1124 for accommodating the battery cell assembly 1110. The cover body 1122 can be of the plate-shaped structure; the box frame 1123 can be of the hollow structure with two ends opened, for example, the box frame 1123 is of the annular frame structure; the cover body 1122 covers one open side of the box frame 1123, and the refrigerant heat exchange component 1130 is connected to the other open (namely the opening) side of the box frame 1123; and the cover body 1122 can be arranged opposite to the refrigerant heat exchange component 1130. The box body 1121 can be in various shapes, such as a cylinder and a cuboid.

The refrigerant heat exchange component 1130 can be connected to the box body 1121 and can form the bottom plate to be opposite to the battery cell assembly 1110, such that the refrigerant heat exchange component 1130 can support the battery cell assembly 1110 while exchanging heat with the battery cell assembly 1110, which is conducive to simplifying the structure of the external box body 1121 and reducing the weight of the battery apparatus 1100.

In the embodiments, the refrigerant heat exchange component 1130 can be connected to the box body 1121 and can form the bottom plate, so that the refrigerant heat exchange component 1130 can support the battery cell assembly 1110 while exchanging heat with the battery cell assembly 1110, which is conducive to simplifying the structure of the external box body 1121 and reducing the weight of the battery apparatus 1100.

In some embodiments, the refrigerant flow channel 1134 is filled with a phase-change medium.

Specifically, the phase-change medium is a substance that can undergo a phase transition at a specific temperature and absorb or release a large amount of latent heat during the phase change process. In this example, the heat exchange medium is the phase-change medium; if the battery cell assembly 1110 generates a large amount of heat during charging and discharging, the phase-change medium in the refrigerant flow channel 1134 absorbs the heat and undergoes a phase change, thus slowing down the rapid temperature rise of the battery apparatus 1100. If the temperature of the battery apparatus 1100 decreases, the phase-change medium releases heat, thus slowing down the negative impact of low temperature on battery performance. The phase-change medium used as the heat exchange medium helps maintain the battery apparatus 1100 at a relatively stable temperature, reducing the problems such as capacity degradation and shortened service life caused by excessively high temperatures, or increased internal resistance and reduced charge-discharge efficiency caused by excessively low temperatures, thereby improving the overall performance, reliability, and stability of the battery apparatus 1100.

It is to be noted that the phase-change medium and the refrigerants can work collaboratively. For example, in a large-scale battery energy storage system, the refrigerants will transfer the heat generated by a battery cell assembly 1110 from a battery module to a heat dissipation end of the overall thermal management system, while the phase-change medium is arranged inside the battery module; if the battery cell module 1110 generates a large amount of heat within a short period, the phase-change medium will rapidly absorb the heat and undergoes the phase change, thus mitigating the sharp rise in temperature and buying time for the refrigerants to dissipate heat further; and the two work in coordination to improve the efficiency and stability of the thermal management system.

In the embodiments, the refrigerant flow channel 1134 is filled with the phase-change medium, which is beneficial for improving heat exchange efficiency and enhancing the performance stability of the battery apparatus 1100.

In some embodiments, the refrigerant heat exchange component 1130 is prepared from a combination of one or more metals and non-metals.

Specifically, metal materials have good thermal conductivity, such as copper and aluminum, which can quickly conduct heat, allowing the refrigerant heat exchange component 1130 to efficiently transfer the heat generated by the battery cell assembly 1110. Non-metal materials, like ceramics, have unique thermal performance advantages, for example, some ceramic materials have high-temperature resistance and can maintain stable thermal conductivity even in high-temperature environments. By combining metals and non-metals, respective thermal conduction advantages can be fully utilized to ensure that the refrigerant heat exchange component 1130 maintains efficient heat transfer under different operating temperature ranges and thermal load conditions, thereby improving the overall performance of the battery thermal management system.

In the embodiments, the materials for the refrigerant heat exchange component 1130 are more flexible and variable, and can be flexibly combined and prepared according to the heat exchange requirements of the battery apparatus 1100, so that the refrigerant heat exchange component 1130 can maintain high thermal conductivity and improve the overall performance of the battery thermal management system.

In some embodiments, as shown in FIG. 3 and FIG. 4, the battery apparatus 1100 further includes a connector component 1140 which is connected to the refrigerant heat exchange component 1130 and is in communication with the refrigerant flow channel 1134 of the inlet and outlet zone 1131.

Specifically, a flow channel inlet and a flow channel outlet are formed in the connector component 1140, a refrigerant flow channel 1134 in the inlet and outlet zone 1131 includes a plurality of first-flow-direction flow channels 11311 and a plurality of second-flow-direction flow channels 11312, the flow channel inlet is in communication with each first-flow-direction flow channel 11311, and the flow channel outlet are in communication with each second-flow-direction flow channel 11312. The connector component 1140 can be connected to the refrigerant heat exchange component 1130 in a welded mode, or, the connector component 1140 can further be connected to the refrigerant heat exchange component 1130 through components such as fasteners. The connector component 1140 can be located on the upper portion of the first surface 1135 and arranged close to the edge.

In the embodiments, by arranging the connector component 1140, it can be conveniently connected to an external pipeline used for conveying the heat exchange media (namely the refrigerant), thus improving the assembling convenience.

According to some embodiments of the present application, the present application further provides a refrigerant heat exchange apparatus, which includes the refrigerant heat exchange component 1130 in the battery apparatus 1100 in any one of the above embodiments.

The example of the refrigerant heat exchange apparatus in the present application is on the basis of the example of the battery apparatus 1100 described above; the structure of the refrigerant heat exchange component 1130 in the example of the battery apparatus 1100 is the same as the structure of the refrigerant heat exchange component 1130 in this example, and the technical effects are the same and will not be listed here; and details reference to the above descriptions above regarding the battery apparatus 1100.

According to some embodiments of the present application, the present application further provides an energy storage apparatus, which includes a power converter apparatus and the energy storage apparatus in the above embodiments; and the power converter apparatus is configured to electrically connect a power generation apparatus with the energy storage apparatus.

Specifically, the energy storage apparatus can include one or more battery clusters so as to improve the voltage and capacity of the energy storage apparatus. The battery cluster can include a plurality of battery apparatuses 1100, and the plurality of battery apparatuses 1100 are connected in series through a busbar component so as to improve the voltage of the energy storage apparatus. If the energy storage apparatus includes a plurality of battery clusters, the plurality of battery clusters are connected in parallel so as to improve the capacity of the energy storage apparatus.

The energy storage can be used for an energy storage power station, a wind power generation system, a solar power generation system, a mobile power system or a temporary power supply system and the like. Energy storage apparatuses can store electric energy as needed and output it at the appropriate time. For example, the energy storage apparatus may store the electric energy when the electricity consumption is low, and provide electric energy for relevant users or electrical devices during peak electricity consumption. The energy storage system provided by the embodiment of the present application can be any electrical power system needing the energy storage apparatus.

In some embodiments, the energy storage apparatus is an energy storage container or an energy storage electric cabinet.

In some embodiments, the energy storage apparatus can include a cabinet body and one or more battery clusters, and the battery clusters are accommodated in the cabinet body.

In some embodiments, the energy storage apparatus may include a thermal management module, a main control module, a general control module, a power distribution module, a fire fighting module and other modules.

By way of example, the thermal management module may include a liquid cooling unit; and the liquid cooling unit provides cooling liquid that can condition the temperature of the battery cell for each battery apparatus 1100 through a pipeline.

As an example, a main control module can serve as a battery management unit of the battery clusters and is configured to monitor and manage the battery clusters. The main control module can monitor information such as current, voltage, power or temperature of the battery clusters. For example, the main control module can control charging and discharging current, voltage, and the like of the battery clusters. The main control module includes a Slave Battery Management Unit (SBMU), a fusion switch and other modules.

As an example, the general control module may be used as a battery management unit of the energy storage apparatus and is configured to monitor and manage the energy storage Apparatus. The general control module can monitor the current, voltage, power, state of charge or temperature or other information of the energy storage apparatus. For example, it can control the charge and discharge current, voltage and the like of the energy storage apparatus. As an example, the general control module includes an Insulation Monitoring Module (IMM), a Master Battery Management Unit (MBMU), an EtherNet (ETH), an optical fiber conversion module and other modules.

As an example, a fire fighting module includes a control panel, a detector, an alarm device and the like, and is used for detecting, alarming or extinguishing an energy storage system.

As an example, a power distribution module can be configured to distribute power to modules needing power in the energy storage apparatus.

According to some embodiments of the present application, the present application further provides an energy storage system, which includes a power converter apparatus and the energy storage apparatus in the above embodiments; and the power converter apparatus is configured to electrically connect the power generation apparatus with the energy storage apparatus.

In some embodiments, the energy storage system can include one or more energy storage apparatuses and a power converter system (PCS), with the power converter system connected between the power generation apparatuses and the energy storage apparatuses. The power generation apparatuses are configured to generate electrical energy, and the electrical energy generated by the power generation apparatuses can be stored in the energy storage apparatuses through the power converter system. As an example, the power generation apparatuses may specifically be solar panels, hydroelectric power devices, thermal power devices, wind power devices, and so on. The specific type of the power generation apparatus is not limited in the present application.

According to some embodiments of the present application, as shown in FIG. 1, the present application also provides an electrical apparatus, which includes the battery apparatus 1100 in the above embodiment, the energy storage apparatus in the above embodiment or an energy storage system in the above embodiment; and the battery apparatus 1100 is configured to store or provide electric energy.

The technical solutions described in the embodiments of the present application are applicable to various electrical apparatuses that use the battery cells, such as mobile phones, portable devices, laptops, electric vehicles, electric toys, power tools, vehicles 1000, ships, and spacecraft, for example, spacecraft including airplanes, rockets, space shuttles, and spaceships.

The example of the electrical apparatus in the present application is on the basis of the above example of the battery apparatus 1100, and the example of the electrical apparatus includes all the technical effects of the example of the battery apparatus 1100 and will not be listed here.

According to some embodiments of the present application, the present application also provides a charging network, which includes a charging pile and the energy storage apparatus in the above embodiment or the energy storage system in the above embodiment; and the energy storage apparatus is configured to provide electric energy for the charging pile.

For example, the charging network includes the charging pile and the energy storage apparatus; the charging pile is electrically connected to the energy storage apparatus, and the energy storage apparatus is configured to provide the electric energy for the charging pile. The charging pile is electrically connected to the battery apparatus 1100 in the energy storage apparatus through a cable, and the battery apparatus 1100 can provide the stored electric energy stored for the charging pile. The charging pile is provided with one or more connectors, and the connectors are connected to the electrical apparatus (such as the vehicle 1000), so that energy can be supplemented for the electrical apparatus.

The energy storage apparatus can be located inside the charging pile (such as a storage and charging all-in-one machine) or outside the charging pile.

The above are merely preferred embodiments of the present application, and only specifically describe the technical principles of the present application. These descriptions are only intended to explain the principles of the present application and cannot in any way be interpreted as limiting the scope of protection of the present application. Based on the explanation here, any modifications, equivalent substitutions, and improvements made within the spirit and principles of the present application, as well as other specific embodiments of the present application that can be conceived by those skilled in the art without engaging in creative labor, should be included within the scope of protection of the present application.

## Claims

1. A battery apparatus (1100), comprising:
a box body assembly (1120) having an accommodating cavity (1124);
a battery cell assembly (1110) that is accommodated in the accommodating cavity (1124);
a refrigerant heat exchange component (1130) comprising an inlet and outlet zone (1131), a main flow distribution and collection zone (1132), and a heat exchange zone (1133) which are all internally provided with refrigerant flow channels (1134), the main flow distribution and collection zone (1132) being arranged between the inlet and outlet zone (1131) and the heat exchange zone (1133), the refrigerant flow channel (1134) in the main flow distribution and collection zone (1132) being in communication with the refrigerant flow channels (1134) in the inlet and outlet zone (1131) and the main flow distribution and collection zone (1132), wherein the inlet and outlet zone (1131) is configured to guide refrigerants into or out of the refrigerant flow channels (1134); the projections of the heat exchange zone (1133) and the battery cell assembly (1110) on the refrigerant heat exchange component (1130) are overlapped, the refrigerant flow channel (1134) in the heat exchange zone (1133) is configured to perform heat exchange with the battery cell assembly (1110); and the main flow distribution and collection zone (1132) and the inlet and outlet zone (1131) are both configured such that their projections on the refrigerant heat exchange component (1130) do not overlap with the projection of the battery cell assembly (1110).

2. The battery apparatus (1100) according to claim 1, wherein the heat exchange zone (1133) comprises a direct flow zone (11331) and a reversing zone (11332); the refrigerant flow channel (1134) in the direct flow zone (11331) is configured to be a plurality of direct flow channel structures (11333) arranged at intervals in a second direction (Y), and each direct flow channel structure (11333) extends in a first direction (X); the refrigerant flow channel (1134) in the reversing zone (11332) is configured to be a bent flow channel structure (11334) that is in communication with the direct flow channel structures (11333); the second direction (Y) is perpendicular to the first direction (X); and the battery cell assembly (1110) is arranged opposite to the direct flow zone (11331), or, the battery cell assembly (1110) is arranged opposite to the direct flow zone (11331) and the reversing zone (11332).

3. The battery apparatus (1100) according to claim 2, wherein the battery cell assembly (1110) comprises a plurality of battery cell groups (1111) arranged in the second direction (Y), and each battery cell group (1111) comprises a plurality of battery cells (1112) stacked in the first direction (X).

4. The battery apparatus (1100) according to claim 2, wherein the direct flow channel structures (11333) have a first length (L1) in the first direction (X), the bent flow channel structure (11334) has a second length (L2) in the first direction (X), and a ratio of the second length (L2) to the first length (L1) is less than 0.1.

5. The battery apparatus (1100) according to claim 2, wherein the reversing zone (11332) is located at an edge of the heat exchange zone (1133), and/or, the reversing zone (11332) is located between the direct flow zone (11331) and the main flow distribution and collection zone (1132).

6. The battery apparatus (1100) according to claim 2, wherein the reversing zone (11332) further comprises a secondary flow distribution and collection structure (11335) which is connected between part of the bent flow channel structure (11334) and part of the direct flow channel structures (11333).

7. The battery apparatus (1100) according to any one of claims 1 to 6, wherein the heat exchange zone (1133) has a third length (L3) in the first direction (X), the refrigerant heat exchange component (1130) has a fourth length (L4) in the first direction (X), and the ratio of the third length (L3) to the fourth length (L4) is greater than or equal to 0.6 and less than 1.

8. The battery apparatus (1100) according to any one of claims 1 to 6, wherein the heat exchange zone (1133) is provided with a heat exchange surface (11339) opposite to the battery cell assembly (1112), and the refrigerant flow channel (1134) in the heat exchange zone (1133) is configured to be opposite to the heat exchange surface (11339); and the ratio of a projection area of the refrigerant flow channel (1134) in the heat exchange zone (1133) on the heat exchange surface (11339) to the area of the heat exchange surface (11339) is greater than or equal to 0.4 and less than or equal to 0.8.

9. The battery apparatus (1100) according to any one of claims 2 to 6, wherein a spacing distance (L5) between two adjacent direct flow channel structures (11333) is 5-15 mm in the second direction (Y).

10. The battery apparatus (1100) according to any one of claims 1 to 6, wherein a width (L6) of the refrigerant flow channel is 6-15 mm.

11. The battery apparatus (1100) according to any one of claims 1 to 6, wherein a plurality of cavities (1138) are also formed in the refrigerant heat exchange component (1130), and each cavity (1138) is not in communication with the refrigerant flow channel (1134).

12. The battery apparatus (1100) according to any one of claims 1 to 6, wherein the refrigerant heat exchange component (1130) is further provided with a plurality of mounting holes (1139), and the mounting holes are distributed in the heat exchange zone (1133) and avoid the refrigerant flow channels (1134).

13. The battery apparatus (1100) according to any one of claims 1 to 6, wherein the inlet and outlet zone (1131), the main flow distribution and collection zone (1132), and the heat exchange zone (1133) are sequentially arranged in the first direction (X); the refrigerant flow channel (1134) in the inlet and outlet zone (1131) comprises a first-flow-direction flow channel (11311) and a second-flow-direction flow channel (11312), and the refrigerant in the first-flow-direction flow channel (11311) has a flowing direction opposite to that of the refrigerant in the second-flow-direction flow channel (11312); the refrigerant flow channel (1134) in the main flow distribution and collection zone (1132) comprises a first flow channel (11321) and a second flow channel (11322), and the refrigerant flow channel (1134) in the heat exchange zone (1133) comprises an upstream flow channel (11337) and a downstream flow channel (11338) which are in communication with each other; and the first-flow-direction flow channel (11311), the first flow channel (11321), and the upstream flow channel (11337) are sequentially arranged in a communicating mode, and the second-flow-direction flow channel (11312), the second flow channel (11322), and the downstream flow channel (11338) are sequentially arranged in a communicating mode.

14. The battery apparatus (1100) according to claim 13, wherein the refrigerant flow channel (1134) in the heat exchange zone (1133) comprises a plurality of heat exchange flow sub-channels (11336) arranged in parallel, and each heat exchange flow sub-channel (11336) comprises the upstream flow channel (11337) and the downstream flow channel (11338); the upstream flow channels (11337) in part of the heat exchange flow sub-channels (11336) are adjacent to and in heat conduction fit with the downstream flow channels (11338) in the adjacent heat exchange flow sub-channels (11336); and the downstream flow channels (11338) in part of the heat exchange flow sub-channels (11336) are adjacent to and in heat conduction fit with the upstream flow channels (11337) in the adjacent heat exchange flow sub-channels (11336).

15. The battery apparatus (1100) according to claim 14, wherein the plurality of heat exchange flow sub-channels (11336) are sequentially arranged in the second direction (Y), the upstream flow channels (11337) and the downstream flow channels (11338) in the heat exchange flow sub-channels (11336) all extend in the first direction (X), and the second direction (Y) is perpendicular to the first direction (X).

16. The battery apparatus (1100) according to claim 13, wherein at least one first-flow-direction flow channel (11311) is arranged, a plurality of second-flow-direction flow channels (11312) are arranged, and all the first-flow-direction flow channels (11311) are distributed between every two adjacent second-flow-direction flow channels (11312).

17. The battery apparatus (1100) according to claim 16, wherein the flowing direction of the refrigerants in the first-flow-direction flow channels (11311) is an entering direction of the refrigerant flowing to the main flow distribution and collection zone (1132).

18. The battery apparatus (1100) according to any one of claims 1 to 6, wherein the box body assembly (1120) comprises a box body (1121) with an opening; the refrigerant heat exchange component (1130) is connected to the box body (1121) and covers the opening to form the accommodating cavity (1124); and the refrigerant heat exchange component (1130) is opposite to the battery cell assembly (1110).

19. A refrigerant heat exchange apparatus, comprising the refrigerant heat exchange component (1130) in the battery apparatus (1100) according to any one of claims 1 to 18.

20. An electrical apparatus, comprising the battery apparatus (1100) according to any one of claims 1 to 18, wherein the battery apparatus (1100) is configured to store or provide electric energy.
